# EUROPÄISCHE PATENTSCHRIFT

(11) **EP 2 887 011 B1**
(45) Veröffentlichungstag und Bekanntmachung des Hinweises auf die Patenterteilung: **08.02.2017**
(21) Anmeldenummer: 13199065.7
(22) Anmeldetag: 20.12.2013
(51) Int. Cl.: B29C 67/00, G01B 5/008, G01B 21/04

(54) **Koordinatenmessmaschine mit hochpräziser 3D-Druckfunktionalität**
Coordinate measuring machine with high precision 3D printing functionality
Machine de mesure de coordonnées dotée d'une fonctionnalité d'impression 3D haute précision

(43) Veröffentlichungstag der Anmeldung: 24.06.2015
(73) Patentinhaber: Hexagon Technology Center GmbH, 9435 Heerbrugg (CH)
(72) Erfinder: Pettersson, Bo, 1279 Luxembourg (LU); Siercks, Knut, 9402 Mörschwil (CH); Jordil, Pascal, 1612 Ecoteaux (CH)
(74) Vertreter: Holzheu, Christian

(56) Entgegenhaltungen:
- EP-A1- 2 641 661
- US-A1- 2001 017 085
- US-A1- 2008 252 671

## Beschreibung

Die Erfindung betrifft ein Verfahren zum Aufbau eines Objekts und eine hierfür vorgesehene Koordinatenmessmaschine.

In vielen technischen Anwendungsbereichen besteht das Bedürfnis, Oberflächen von Objekten und damit auch die Objekte selbst mit hoher Genauigkeit zu vermessen. Dieses gilt insbesondere für die fertigende Industrie, für die das Vermessen und Überprüfen von Oberflächen von Werkstücken hohe Bedeutung, insbesondere auch zu Zwecken der Qualitätskontrolle, hat.

Für diese Anwendungen werden üblicherweise Koordinatenmessmaschinen eingesetzt, welche eine präzise Vermessung der Geometrie einer Objektoberfläche, typischerweise mit Mikrometer-Genauigkeit, ermöglichen. Zu vermessende Objekte können beispielsweise Motorblöcke, Getriebe und Werkzeuge sein. Bekannte Koordinatenmessmaschinen vermessen die Oberfläche, indem ein mechanischer Kontakt hergestellt und die Oberfläche abgetastet wird. Beispiele hierfür sind Portalmessmaschinen, wie sie z.B. in der DE 43 25 337 oder DE 43 25 347 beschrieben werden. Ein anderes System beruht auf der Verwendung eines Gelenkarms, dessen am Ende des mehrteiligen Arms angeordneter Messsensor entlang der Oberfläche bewegt werden kann. Gattungsgemässe Gelenkarme werden beispielsweise in der US 5,402,582 oder der EP 1 474 650 beschrieben.

Im Stand der Technik wird mit solchen Koordinatenmessgeräten als Standardmesssensor ein taktiler Sensor verwendet, welcher beispielsweise aus einer Rubinkugel besteht, die auf einem Messstab montiert ist. Die Auslenkung des taktilen Sensors, im Falle einer für dreidimensionale Messungen ausgelegten Koordinatenmessmaschine in drei zueinander senkrechten Richtungen X, Y und Z, wird bei der Abtastung über ein Schaltelement oder wegmessendes Element bestimmt. Anhand des Schaltpunkts oder Auslenkungswegs werden der Ort des Kontakts und damit die Oberflächenkoordinaten berechnet.

Zur Rekonstruktion des Oberflächenprofils aus den Messdaten müssen die mechanischen Abmessungen des Sensors selbst und dessen Ausrichtung beim Kontakt mit der Objektoberfläche berücksichtigt werden. Der Sensor ist ausgebildet mit einer Messspitze bekannter Geometrie, typischerweise sphärisch oder für spezielle Anwendungen ellipsoidal, typischerweise mit einem (Haupt-)Radius in der Grössenordnung einiger Millimeter. Der Begriff "Messspitze" ist im Zusammenhang mit der vorliegenden Erfindung allgemein zu verstehen als (taktiler) Messsensor jeder beliebigen Form und Ausdehnung, wobei dieser nicht zwingend eine spitz zulaufende Form aufweisen muss (jedoch kann). Die mit der Koordinatenmessmaschine unter Verwendung eines taktilen Sensors gemessenen Rohdaten stellen die gemessenen Ortskoordinaten eines Bezugspunkts der Messspitze, beispielsweise des Messspitzen-Zentrums, dar.

Im Stand der Technik sind ferner Ansätze zur berührungslosen Vermessung, insbesondere mit optischen Sensoren, bekannt. Mittels eines solchen optischen Sensors können mit einem ausgesandten Messlichtstrahl, insbesondere Laserstrahl, Oberflächentopografien sehr genau vermessen werden. Die Auflösung für eine Vermessung von Oberflächenprofilen mit optischen Messsensoren kann deutlich höher sein als diejenige mit taktilen Messsensoren. Inzwischen in die Messtechnik mit Koordinatenmessmaschinen eingeführte optische Sensoren beruhen beispielsweise auf einer Einstrahlung von Laserlicht auf eine Objektoberfläche für interferometrische Messungen (EP 2 037 214). Auch Verfahren beruhend auf Weisslicht-Interferometrie (DE 10 2005 061 464) und chromatisch-konfokale Verfahren (FR 273 8343) wurden vorgeschlagen.

Ein Nachteil im Vermessungs- und Produktionsverfahren für Werkstücke ist derjenige, dass im Falle der Feststellung einer Abweichung der strukturellen Dimensionen des bereits gefertigten Werkstücks von vorgegeben Sollwerten und Toleranzen, das Werkstück typischerweise als Ausschuss zu betrachten und damit auszusondern ist. Im Rahmen des Vermessungsschritts mit der Koordinatenmessmaschine kann gewöhnlich nicht weiter in den Produktionsprozess eingegriffen und dadurch eine entsprechende Anpassung des Werkstücks vorgenommen werden. Eine derartige Vermessung erfolgt typischerweise nach der Fertigung des Werkstücks. Mit anderen Worten: das gefertigte Produkt ist in diesem Vermessungsstadium nicht nochmals abzuändern sondern wird entweder als korrekt oder fehlerhaft gefertigt angesehen. Nacharbeitungen an einem fehlerhaften Werkstück sind in diesem Zusammenhang nur mit erheblichem Mehraufwand zu realisieren.

Ein weiterer Nachteil in diesem Zusammenhang stellt die Produktion des Werkstückes an sich dar. So kann beispielsweise für eine verhältnismässig kleine Veränderung der Werkstückform und/oder -grösse ein grosser Aufwand zur entsprechenden Anpassung des Produktionsprozesses (z.B. der dafür notwendigen Werkzeuge) notwendig werden. Wird z.B. bei einer Vermessung wiederholt festgestellt, dass das produzierte Stück nicht den Vorgaben entspricht (z.B. aufgrund eines Werkzeugfehlers) so kann dadurch schnell eine aufwändige und zeitintensive Werkzeuganpassung erforderlich werden.

Ferner ist hinsichtlich der Werkstückproduktion festzuhalten, dass diese typischerweise mit geringer Flexibilität bei einer geforderten zumindest gleich bleibend hohen Fertigungsgenauigkeit verbunden ist.

Weiterhin ist es aus US 2008/0252671 A1, US 2001/0017085 A1 und EP 2641661 A1 bekannt, einen an einer Koordinatenmessmaschine befestigten Druckkopf zum Applizieren eines Materials gesteuert zu führen.

Es ist daher Aufgabe der vorliegenden Erfindung eine Vorrichtung und ein entsprechendes Verfahren für eine Werkstückproduktion mit einer hinsichtlich der Fertigungsgenauigkeit fortlaufend präzisen Überwachbarkeit bereitzustellen.

Ferner ist es eine Aufgabe der Erfindung eine entsprechende Vorrichtung bereitzustellen, mittels derer eine variable und flexible Werkstückproduktion ermöglicht ist, wobei eine verbesserte Fertigungspräzision bereitgestellt ist, insbesondere wobei die präzise Überwachbarkeit des Produktionsfortschrittes gegeben ist.

Diese Aufgabe wird durch die Merkmale der unabhängigen Ansprüche gelöst. Die Erfindung stellt dabei ein Verfahren nach Anspruch 1, eine Koordinatenmessmaschine nach Anspruch 8, sowie ein Computerprogrammprodukt nach Anspruch 15 bereit. Merkmale, die die Erfindung in vorteilhafter Weise weiterbilden, sind den abhängigen Patentansprüchen 2-7 bzw. 8-14 zu entnehmen.

Die Erfindung betrifft zunächst eine Koordinatenmessmaschine (CMM),
die zum strukturellen Aufbauen eines dreidimensionalen Objekts ausgebildet ist. Das strukturelle Aufbauen wird dabei mittels einer schichtweisen Materialapplikation und/oder Materialfixierung realisiert. Neben einem Messmodus zur hochgenauen Vermessung eines im Messvolumen der Maschine befindlichen Objekts mit einem Messsensor, der von dem Instrumententräger der CMM (entspricht typischerweise einem Messkopf einer CMM) tragbar ist, weist die CMM für den Objektaufbau einen entsprechend ausführbaren Objektaufbaumodus auf, wobei ein Produktionswerkzeug, z.B. ein Druckkopf, für die Materialapplikation und/oder Materialfixierung von dem Instrumententräger getragen wird. Das Produktionswerkzeug ist hierfür somit an dem Instrumententräger angeordnet und ist mittels der Maschinenstruktur (Führungen und Antriebe) innerhalb des Messvolumens frei positionierbar, führbar und insbesondere - beispielsweise wenn die CMM einen schwenkbaren Instrumententräger aufweist - frei ausrichtbar. Dadurch kann für das Produktionswerkzeug eine Positionierungsgenauigkeit entsprechend derjenigen für die Positionierung des Messsensors für die Punktvermessung mittels der CMM erzielt werden und somit ein Objektaufbau ebenfalls derart hochgenauer ausgeführt werden.

Für den Objektaufbau mittels Materialapplikation wird z.B. eine erste Schicht aus flüssigem bzw. sprühfähigem Material (z.B. Kunststoff oder Metall) ausgebracht und - insbesondere nach einer bestimmten Antrocknzeit - eine weitere Schicht des Materials auf die erste aufgebracht. Dieser Vorgang wird derart oft wiederholt, bis das Objekt gemäss einem vorliegenden Objektmodell fertig gestellt ist. Die jeweils applizierten Materialen und/oder die Zeiten bis zum Aufbringen einer neuen Schicht sind vorzugsweise so gewählt, dass zwischen den Schichten eine feste Verbindung zustande kommt und so ein einstückiges Objekt erzeugbar ist.

Alternativ - falls beispielsweise zwei nicht zusammenhängende Strukturen gebildet werden sollen - können die Applikationszeiten derart eingestellt werden, dass keine Materialverbindung entsteht und zwei aneinander liegende Schichten evtl. zwar mit Kontakt jedoch strukturell unverbunden (getrennt) vorliegen, d.h. es findet z.B. eine entsprechende Applikationspause statt.

Für das Materialapplizieren ist das Produktionswerkzeug vorzugsweise mit einer Düse ausgerüstet, durch die das Material aussprühbar ist, wobei durch die spezifische Ausgestaltung der Düse und eine Durchflussgeschwindigkeit des Materials durch die Düse die Schichtdicke und/oder die Homogenität hinsichtlich der flächigen Materialverteilung definierbar ist. Die Schichtdicke hängt zudem von der Führungsgeschwindigkeit des Instrumententrägers (also des Produktionswerkzeugs) während der Materialapplikation ab. Über entsprechende Versorgungskanäle, die mit der Düse und einem das Material bevorratenden Vorratsbehälter verbunden sind, ist die Materialversorgung herstellbar.

Für den Objektaufbau mittels Materialfixierung ist an dem Instrumententräger z.B. ein Strahlungsemitter als Produktionswerkzeug angeordnet. Die Strahlquelle kann dabei ebenfalls an dem Instrumententräger vorgesehen sein. Alternativ hierzu kann die durch den Emitter emittierbare Strahlung mittels einer optischen Führung, z.B. Faser, von einer externen Quelle zu dem Emitter geführt werden.

Für die Materialfixierung wird das zu fixierende Material (aus dem das Objekt gefertigt werden soll) z.B. im Messvolumen der CMM, insbesondere auf der Basis, in einer dünnen Schicht bereitgestellt. Das Material ist dabei z.B. ein Kunststoffpulver oder eine viskoses Kunststoffflüssigkeit. Eine Strahlung, z.B. gerichtete UV-Strahlung oder Laserstrahlung, wird auf die dünne Materialschicht emittiert, wodurch das Material im Auftreffbereich der Strahlung lokal fixiert bzw. verfestigt wird (zumindest teilweise verfestigt wird, sodass die nachfolgende Schicht mit der ersten Schicht fest verbindbar bleibt). Beispielsweise findet dabei eine UV-Vernetzung der Kunststoffflüssigkeit (durch Einwirkung der UV-Strahlung) oder ein Verschmelzen von Pulverpartikeln (durch Einwirkung der Laserstrahlung) statt. Anschliessend wird eine weitere Schicht auf die bereits bestrahlte Schicht aufgebracht und wiederum entsprechend zur Fixierung bestrahlt.

Erfindungsgemäss kann auch eine Kombination aus beiden Verfahren erfolgen, wobei insbesondere zunächst das Material appliziert und anschliessend fixiert wird.

Die Erfindung betrifft somit ein Verfahren zum Aufbau eines Objekts mittels einer Koordinatenmessmaschine, wobei die Koordinatenmessmaschine zumindest eine Steuerungseinheit und eine Antriebseinheit zur gesteuerten Bewegung eines Instrumententrägers relativ zu einer Basis aufweist. Der Instrumententräger ist zum Tragen zumindest eines, insbesondere jeweils modular anbringbaren, Messsensors und Produktionswerkzeugs sowohl jeweils alleine oder in Kombination ausgebildet. Im Rahmen des Verfahrens erfolgen basierend auf digitalen Modelldaten, die das Objekt repräsentieren, ein gesteuertes Führen und insbesondere Ausrichten des dabei von dem Instrumententräger getragenen Produktionswerkzeugs und ein in Abhängigkeit von einer jeweiligen Produktionswerkzeugposition und insbesondere Produktionswerkzeugausrichtung gesteuertes positionsgenaues Materialapplizieren und/oder -fixieren vermittels des Produktionswerkzeugs, insbesondere wobei das Aufbauen des Objekts durch schichtweises Materialapplizieren und/oder - fixieren erfolgt.

Im Rahmen der Erfindung wird ferner insbesondere ein Oberflächenabtasten mit einem Positionsbestimmen für wenigstens einen Messpunkt mittels des von dem Instrumententräger getragenen, insbesondere an dem Produktionswerkzeug angeordneten, Messsensors ausgeführt, insbesondere wobei der Messsensor als taktiler oder optischer Sensor ausgebildet ist. Dadurch wird die für eine gattungsgemässe Koordinatenmessmaschine typische hochpräzise Oberflächenvermessung von Objekten bereitgestellt. Der an der CMM Struktur angebrachte Messsensor ist dabei also mittels der Antriebseinheit und Steuerungseinheit mit Mikrometergenauigkeit (± 1-10 µm) positionierbar.

Der Messpunkt, für welchen die Positionsbestimmung ausführbar ist, ist dabei insbesondere verkörpert durch einen Oberflächenpunkt
- des zumindest teilweise aufgebauten Objekts, wobei das Materialapplizieren im Rahmen des Aufbauens des Objekts in Abhängigkeit von der Position des Messpunkts und von den digitalen Modelldaten für das Objekt automatisch gesteuert angepasst, insbesondere korrigiert, wird oder
- eines Vorlageobjekts, wobei die digitalen Modelldaten in Abhängigkeit von der Vermessung des Vorlageobjekts erzeugt und/oder aktualisiert werden oder
- eines vorbekannten Referenzkörpers, wobei im Rahmen des Verfahrens ein Aktualisierungsschritt erfolgt mit einem Referenzieren der Instrumententrägerposition anhand der an dem Referenzkörper bestimmten Position für den Messpunkt.

Hinsichtlich der durch die Erfindung bereitgestellten Genauigkeit für den Aufbau des Objekts erfolgt gemäss einer Ausführungsform der Erfindung das Aufbauen des Objekts durch das positionsgenaue Materialapplizieren und/oder - fixieren mit einer Genauigkeit entsprechend dem Positionsbestimmen für den wenigstens einen Messpunkt im Rahmen des durch die Koordinatenmessmaschine ausführbaren Oberflächenabtastens (mikrometergenau), insbesondere mit einer entsprechenden Positionierungsgenauigkeit für das Produktionswerkzeug. Insbesondere erfolgt das Materialapplizieren und/oder -fixieren mit einer der Positionierungsgenauigkeit des Messsensors bzw. der Messgenauigkeit der Koordinatenmessmaschine entsprechenden Genauigkeit.

Hierdurch wird eine für die Erstellung eines Objekts aus dem applizierten und/oder fixierten Material sehr hohe Mass- und Strukturgenauigkeit bereitgestellt, wobei durch die jeweilige Wahl der digitalen Modelldaten zudem flexibel ein beliebiges aus einer Menge unterschiedlicher zu erzeugender Objekte gewählt werden kann. Dabei ist ein Wechsel des jeweils zu erstellenden Objekts jederzeit ohne Genauigkeitverluste möglich.

Im Rahmen einer weiteren Ausführungsform der Erfindung erfolgt ein Aufbauen einer Grundstruktur des Objekts durch Grobapplikation des Materials mittels des Produktionswerkzeugs und ein Anpassen der Grundstruktur des Objekts durch positionsgenaue Oberflächenmodifikation der zumindest teilweise aufgebauten Grundstruktur.

Das Objekt wird somit in zwei Stufen erstellt. Zunächst erfolgt eine grobe, dafür jedoch im Vergleich schnellere, Erstellung der Grundstruktur und danach erfolgt eine entsprechend präzisere Anpassung der Grundstruktur. Beide Prozessschritte werden basierend auf den digitalen Modelldaten ausgeführt.

Im Rahmen des Anpassens der Grundstruktur erfolgt insbesondere eine positionsgenaue Feinapplikation des Materials, oder eines alternativen Materials, zur präzisen Oberflächenstrukturierung mittels des Produktionswerkzeugs, insbesondere wobei das Produktionswerkzeug als Druckkopf ausgebildet ist oder einen Druckkopf aufweist, und/oder es erfolgt ein Oberflächenabtragen mittels eines Modifikationswerkzeugs, insbesondere Fräswerkzeug oder Bearbeitungslaser, wobei der Instrumententräger oder das Produktionswerkzeug das Modifikationswerkzeug trägt.

Für die Grobapplikation ist insbesondere eine Grobapplikations-Druckeinheit und für die Feinapplikation ein Feinapplikations-Druckeinheit vorgesehen, wobei die Grobapplikations-Druckeinheit und die Feinapplikations-Druckeinheit an dem Instrumententräger angeordnet sind oder das Produktionswerkzeug die Grobapplikations-Druckeinheit und die Feinapplikations-Druckeinheit aufweist. Dabei kann insbesondere ein automatisches Wechseln der Verwendung der Druckeinheiten in Abhängigkeit von der auszuführenden Applizierung erfolgen.

Für das Aufbauen und Anpassen des Objekts sind somit unterschiedliche Ansätze bereitgestellt. Insbesondere kann nach Aufbau der Grundstruktur diese durch eine Materialapplikation in feinerer, d.h. präziserer, Form weiter aufgebaut und/oder dadurch finalisiert werden. Dabei kann beispielsweise eine optimierte Oberflächeneigenschaft, z.B. bezüglich einer Rauhigkeit oder hinsichtlich eines Oberflächenmaterials, erzielt werden. Ferner können hierdurch kleiner dimensionierte Strukturteile des Objekts präzise erstellt werden.

Ebenso kann nach Aufbau der Grundstruktur ein Materialabtrag erfolgen. Beispielsweise können dadurch bei der Materialapplikation erzeugte Ungenauigkeiten - z.B. identifiziert durch Vermessen der bereits erstellten Grundstruktur - reduziert oder entfernt werden. Ausserdem kann das Materialabtragen auch Teil des geplanten Produktionsprozesses sein, z.B. um eine bestimmte Objektstruktur effizienter (schneller) erzeugen zu können.

Ein weiterer Aspekt bezüglich des Objektaufbaus durch Materialapplizieren mittels eines Druckkopfes bzw. einer Druckeinheit - gemäss einer speziellen Ausführungsform der Erfindung - betrifft die Beschleunigung des Druckprozesses durch aktives Kühlen des applizierten Materials, insbesondere von appliziertem flüssigem Kunststoff (Plastik). Der Instrumententräger oder der Druckkopf verfügen hierzu über eine Kühlungsdüse mittels derer kühle Luft auf das applizierte Material geblasen wird und dadurch das Material abkühlt. Somit kann eine soeben applizierte Plastikschicht schneller abgekühlt werden damit z.B. die nächste Schicht ebenso schneller aufgetragen werden kann. Die Kühlungsdüse kann beispielsweise durch die für den Betreib der CMM ohnehin zur Verfügung stehende Druckluft versorgt werden.

Gemäss einer spezifischen Ausführungsform der Erfindung erfolgt im Rahmen des Verfahrens ein Positionieren eines definierten Rohkörpers in bestimmter Ausrichtung und Positionierung bezüglich der Basis und innerhalb eines Messvolumens, das durch die Bewegbarkeit des Instrumententrägers (also durch die strukturelle Ausgestaltung der Koordinatenmessmaschine) definiert ist, insbesondere wobei das Positionieren mittels eines an dem Instrumententräger oder Produktionswerkzeug anbringbaren Transportwerkzeugs erfolgt. Das Aufbauen des Objekts erfolgt mittels positionsgenauen Materialapplizierens an den Rohkörper vermittels des Produktionswerkzeugs.

Damit kann beispielsweise eine Grundstruktur für das Objekt vorbereitet auf der Basis platziert werden und das Finalisieren des Objekts mittels gesteuerten Materialapplizierens erfolgen. Dadurch können insbesondere grossvolumige Objekte in vergleichsweise kürzerer Prozesszeit produziert werden. Ferner kann der Rohkörper beispielsweise durch einen Hohlkörper verkörpert sein, wodurch wiederum Material eingespart und das Gewicht des resultierenden Objekts optimiert (z.B. verringert) bzw. die Gewichtsverteilung angepasst werden kann.

Ein solcher Rohkörper kann beispielsweise vor Beginn des Druckprozesses bzw. des Objektaufbauprozesses mittels eines Transportwerkzeugs auf dem Tisch der CMM platziert werden. Das Transportwerkzeug ist hierzu an dem Instrumententräger angebracht bzw. vorgesehen oder wird von dem Druckkopf mit bereitgestellt. Das Transportwerkzeug ist insbesondere modular am Instrumententräger oder am Produktionswerkzeug anbringbar ausgebildet. Das Transportwerkzeug kann z.B. als Greifer ausgebildet sein und/oder auf einem mechanischen, magnetischen oder auf dem Unterdruckprinzip beruhenden Trage- bzw. Verbindungsmechanismus basieren. Ein entsprechender Rohkörper kann hierzu z.B. am Rand der CMM platziert und vorgehalten sein, von dem Transportwerkzeug aufgenommen (d.h. weggetragen) werden und an einem vorbestimmten und in einer vorbestimmten Ausrichtung auf dem Tisch der CMM platziert werden. Es versteht sich, dass solche Rohkörper in unterschiedlichen Grössen und Formen vorgehalten werden können.

Gemäss einer speziellen Ausführungsform wird der Instrumententräger in Abhängigkeit des Ausführens des Aufbauens oder des Anpassens der Grundstruktur derart ausgerichtet, dass das Produktionswerkzeug bzw. das Modifikationswerkzeug in einer für die Materialapplikation oder für die Oberflächenmodifikation vorgesehenen Arbeitsausrichtung relativ zur Objektoberfläche definiert ausgerichtet ist, insbesondere wobei der Instrumententräger wenigstens zwei Druckköpfe trägt. Das jeweilige Werkzeug wird dabei insbesondere normal zur Oberfläche bzw. der zu erstellenden Oberfläche ausgerichtet.

Im Rahmen des Verfahrens wird das Produktionswerkzeug gemäss einer weiteren Ausführungsform der Erfindung entlang eines definierten Pfades geführt, wobei der Pfad aus den digitalen Modelldaten abgeleitet ist.

Insbesondere ist die Koordinatenmessmaschine, mit welcher das Verfahren nach einer der obigen Ausführungen ausgeführt wird, ausgebildet nach einer der folgenden erfindungsgemässen Ausführungsformen für die Koordinatenmessmaschine.

Die Erfindung betrifft also zudem eine Koordinatenmessmaschine mit zumindest einer Steuerungseinheit und einer Antriebseinheit zur gesteuerten Bewegung eines Instrumententrägers relativ zu einer Basis, wobei der Instrumententräger zum Tragen zumindest eines Messsensors ausgebildet ist und wobei die Koordinatenmessmaschine einen Oberflächenabtastmodus zur Bestimmung von wenigstens einer Messpunktposition an einer Oberfläche durch Abtasten der Oberfläche mittels des dabei von dem Instrumententräger getragenen Messsensors bereitstellt.

Erfindungsgemäss ist der Instrumententräger ferner ausgebildet zum Tragen eines zur Materialapplikation und/oder Materialfixierung ausgebildeten Produktionswerkzeugs. Die Koordinatenmessmaschine stellt zudem einen dadurch definierten Objektaufbaumodus bereit, dass in dessen Rahmen gesteuert basierend auf digitalen Modelldaten zumindest das von dem Instrumententräger dabei getragene Produktionswerkzeug führbar und insbesondere ausrichtbar ist und vermittels des Produktionswerkzeugs Material in Abhängigkeit von einer jeweiligen Produktionswerkzeugposition und insbesondere Produktionswerkzeugausrichtung positionsgenau applizierbar und/oder fixierbar ist, so dass durch Ausführung des Objektaufbaumodus, insbesondere gesteuert durch die Steuerungseinheit, das Objekt basierend auf den digitalen Modelldaten, insbesondere schichtweise, aufbaubar ist.

Die digitalen Modelldaten liegen dabei insbesondere in einer entsprechenden Speichereinheit vor, wobei diese beispielsweise ausgebildet ist als Servereinheit und die Daten zu und von dieser Servereinheit übertragbar sind (z.B. via Internet) oder wobei die Speichereinheit verkörpert ist durch eine Datenwolke (Cloud). Alternativ oder zusätzlich kann die Speichereinheit auch der Koordinatenmessmaschine zugeordnet sein und die Daten liegen direkt dort vor.

Gemäss einer speziellen Ausführungsform der Erfindung ist das Produktionswerkzeug ausgeführt als ein zur Materialapplikation ausgebildeter Druckkopf und/oder als ein Laseremitter zur Emission eines Laserstrahls zur Materialfixierung, insbesondere durch Lasersintern. Mittels des Druckkopfs kann somit das Material ausgebracht, z.B. gesprüht, werden. Durch das Emittieren eines Laserstrahls z.B. auf ein zu verfestigendes Material, z.B. Kunststoffpulver, kann das Material aufgeschmolzen und dadurch verbunden und durch ein folgendes Abkühlen verfestigt werden.

Gemäss einer weiteren speziellen Ausführungsform der erfindungsgemässen Koordinatenmessmaschine weist das Produktionswerkzeug eine Grobapplikations-Druckeinheit und eine Feinapplikations-Druckeinheit auf, sowie insbesondere den Messsensor. Bei Ausführung des Objektaufbaumodus wird in diesem Zusammenhang insbesondere - in einer ersten Phase des Objektaufbaumodus - eine Grundstruktur des Objekts mit der Grobapplikations-Druckeinheit erstellt und - in einer zweiten Phase des Objektaufbaumodus - eine Oberflächenanpassung der Grundstruktur mittels der Feinapplikations-Druckeinheit ausgeführt.

Bezüglich der erzielbaren Genauigkeit für das Aufbauen des Objekts ist das Produktionswerkzeug gemäss einer Ausführungsform der Erfindung mit einer im Rahmen des Oberflächenabtastmodus bereitgestellten Positionierungsgenauigkeit für den Messsensor führbar und positionierbar, insbesondere ausrichtbar. Dadurch kann das Produktionswerkzeug, z.B. der Druckkopf, mit einer für Koordinatenmessmaschinen typischen CMM-Genauigkeit geführt und platziert werden, wodurch eine entsprechende (Mass- und Form-) Genauigkeit für das aufzubauende Objekt umsetzbar ist. Beispielsweise kann eine Produktionswerkzeugposition mit einer Positionsunsicherheit (bezüglich des CMM-Koordinatensystems) von < 50µm, insbesondere < 10µm, eingestellt bzw. angefahren werden.

Hinsichtlich möglicher Ausführungen zum Aufbau des Objekts ist gemäss einer Ausführungsform ein definierter Rohkörper in einer bestimmten Ausrichtung und Positionierung bezüglich der Basis und innerhalb eines Messvolumens, das durch die Bewegbarkeit des Instrumententrägers definiert ist, platzierbar, wobei das Objekt durch die positionsgenaue Materialapplikation an den Rohkörper aufbaubar ist, insbesondere durch schichtweises Materialapplizieren.

Gemäss einer speziellen Ausführungsform der Erfindung ist der Instrumententräger ferner ausgebildet zum Tragen eines, insbesondere modulartig anbringbaren, Modifikationswerkzeugs, insbesondere Fräswerkzeug oder Bearbeitungslaser, und die Koordinatenmessmaschine weist einen dadurch definierten Objektmodifikationsmodus auf, dass in dessen Rahmen, insbesondere durch dessen Ausführung, die Objektoberfläche mittels des von dem Instrumententräger getragenen Modifikationswerkzeugs gesteuert bearbeitbar ist, insbesondere wobei ein Materialabtragen erfolgt.

Gemäss weiteren speziellen Ausführungsformen der Erfindung weist das Produktionswerkzeug den Messsensor und/oder eine das Modifikationswerkzeug verkörpernde Modifikationseinheit und/oder eine Kühlungsdüse (zum schnelleren Abkühlen von appliziertem Material mittels eines kalten Luftstroms) auf. Alternativ oder zusätzlich ist der Instrumententräger schwenkbar um mindestens eine Achse ausgeführt und/oder zum gleichzeitigen Tragen von zumindest dem Messsensor und dem Produktionswerkzeug ausgebildet.

Insbesondere können im Rahmen der Erfindung die digitalen Modelldaten zumindest teilweise durch Ausführung des Oberflächenabtastmodus generiert werden.

Bezüglich der Materialbereitstellung zum Aufbau des Objekts weist die Koordinatenmessmaschine gemäss einer bevorzugten Ausführungsform der Erfindung Materialführungsmittel zur Bereitstellung und/oder zum Transport des Materials für den Aufbau des Objekts auf, insbesondere eine rohrförmige Leitungsstruktur und/oder eine temperierbare Rohranordnung, insbesondere wobei die Materialführungsmittel mit dem Produktionswerkzeug verbunden sind und dadurch die Materialversorgung für das Produktionswerkzeug zur Materialapplikation bereitgestellt ist und/oder wobei die Materialführungsmittel eine Isolations- oder Dämmvorrichtung hinsichtlich einer Reduktion der Wärmeabgabe, insbesondere Wärmeabstrahlung, aufweisen.

Die Erfindung betrifft ausserdem ein Computerprogrammprodukt, das auf einem maschinenlesbaren Träger gespeichert ist, zur Steuerung bzw. Ausführung eines oben angeführten Verfahrens, insbesondere wenn das Computerprogrammprodukt auf einer Steuerungs- und Verarbeitungseinheit einer erwähnten Koordinatenmessmaschine ausgeführt wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: eine erste Ausführungsform einer Portal-Koordinatenmessmaschine gemäss der Erfindung mit einem Druckkopf;
- Fig. 2: eine weitere Ausführungsform einer erfindungsgemässen Koordinatenmessmaschine mit schwenkbarem Instrumententräger;
- Fig. 3: eine weitere Ausführungsform einer erfindungsgemässen Koordinatenmessmaschine;
- Fig. 4: eine erfindungsgemässe Ausführungsform eines Druckkopfes für eine Koordinatenmessmaschine gemäss der Erfindung;
- Fig. 5: eine weitere Ausführungsform einer erfindungsgemässen Koordinatenmessmaschine; und
- Fig. 6: eine weitere Ausführungsform einer erfindungsgemässen, als Delta-MM ausgebildeten Koordinatenmessmaschine.

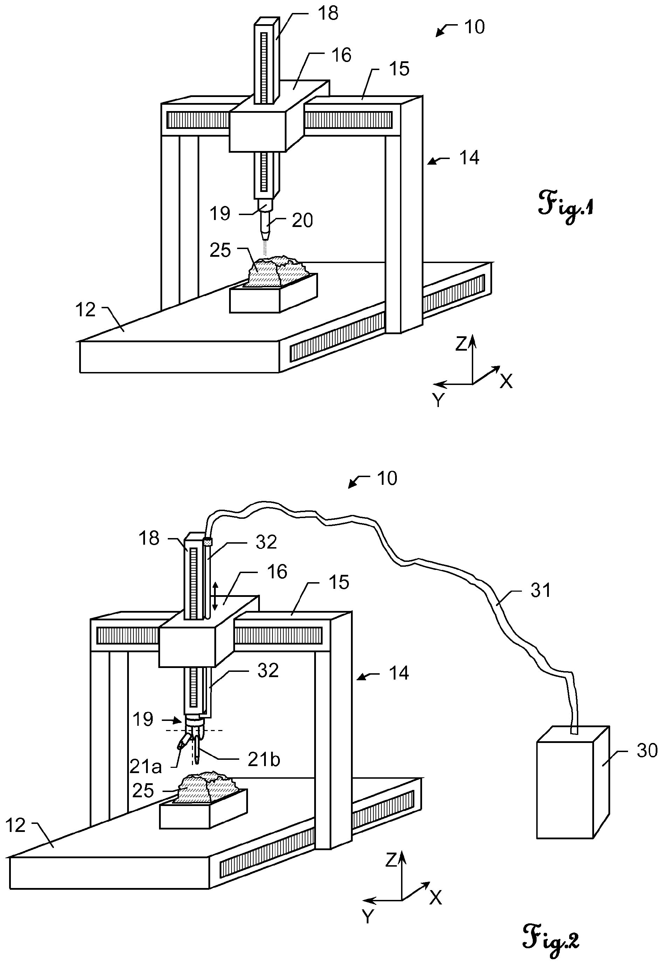

Figur 1 zeigt eine Ausführungsform einer Koordinatenmessmaschine 10 (CMM) gemäss der Erfindung, beispielhaft ausgebildet als Portal-Koordinatenmessmaschine.

Die Koordinatenmessmaschine 10 weist eine Basis 12 auf, auf der ein Portal 14 derart angeordnet ist, dass es in einer longitudinalen Richtung (Y-Richtung) bewegbar ist. Das Portal 14 weist zwei Portalträger, eine Brücke 15 und eine Stange bzw. Z-Säule 18 auf, wobei die Portalträger miteinander an ihren oberen Enden über die Brücke 15 verbunden sind.

Auf der Brücke 15 ist ein Schlitten 16 angeordnet, der entlang der Brücke 15, d.h. in einer die beiden Portalträger verbindenden Raumrichtung (X-Richtung) bewegbar ist. Die Z-Säule 18 ist in einer dritten Raumrichtung (Z-Richtung) bewegbar und wird in einer Aufnahme des Schlittens 16 geführt. Für diese Bewegung in Z-Richtung ist die Z-Säule 18 in Lagern geführt, welche Bestandteile des Schlittens 16 sind. Insbesondre sind die drei Raumrichtungen X, Y und Z senkrecht zueinander ausgerichtet, auch wenn dieses keine Voraussetzung für die vorliegende Erfindung ist.

Die Koordinatenmessmaschine 10 ist ausgebildet zum dreidimensionalen Aufbau eines Objekts 25 und auch zur Bestimmung eines oder einer Vielzahl von Messpunkten auf einem Objekt 25 und weist daher drei lineare Führungen mit Antrieben zur Ermöglichung der Bewegung eines an der Z-Säule 18 an deren der Basis 12 zugewandtem, unterem freiem Ende angeordneten Instrumententrägers 19 in den drei Raumrichtungen X, Y und Z relativ zur Basis 12 auf.

Jeder der linearen Antriebe weist ein zugeordnetes Messelement zur Positionsbestimmung in der zugeordneten Führungsrichtung, beispielsweise drei Messbalken für Positionsbestimmungen in X-, Y- bzw. Z-Richtung, auf.

Der Instrumententräger 19 ist ausgebildet zur modularen Aufnahme zumindest eines Messsensors, wobei der Messsensor beispielsweise als optischer oder taktiler Sensor zur Bestimmung von Positionen von Messpunkten an dem Objekt 25 ausgebildet sein kann. Optische Sensoren ermöglichen hierbei eine kontaktlose Distanzbestimmung zu einem Messpunkt auf dem Objekt 25, während mit einem taktilen Sensor ein mechanischer Kontakt zu einer zu vermessenden Objektoberfläche hergestellt wird.

Gemäss einer alternativen erfindungsgemässen Ausführungsform kann der Instrumententräger 19 als um mindestens eine Achse schwenkbarer Instrumententräger 19 ausgebildet sein (vgl. Fig. 2).

Auch ist die Integration eines Mikroverstellers z.B. in Form eines Piezo-Antriebs oder Scanner-Spiegels innerhalb des Messsensors denkbar. Hierbei wäre beispielsweise eine leichte evtl. resonante Vibration eines licht-emittierenden Stylus (Messsensors) möglich.

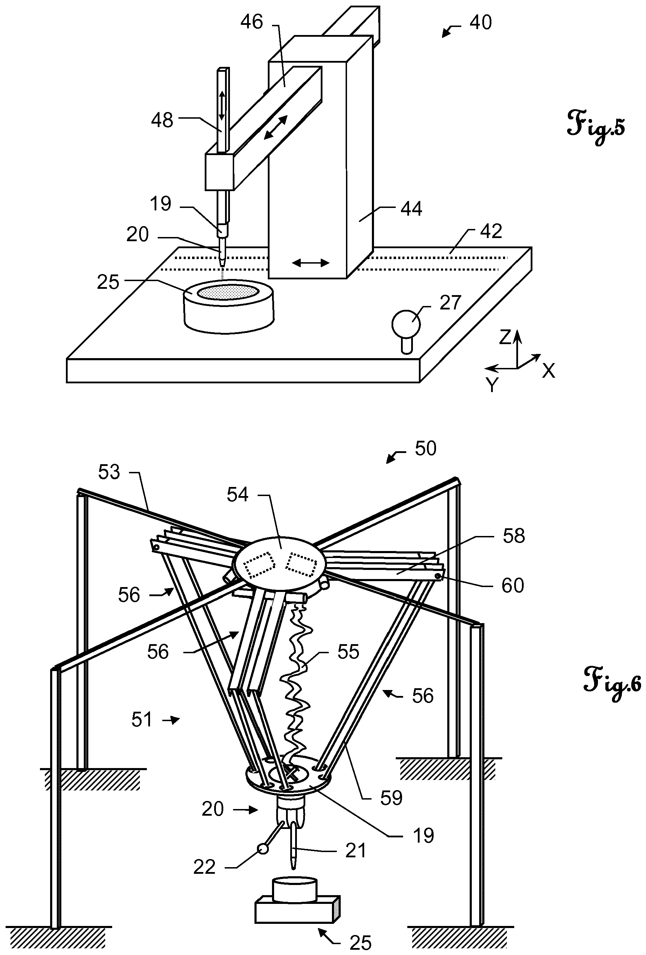

Hinsichtlich der Ausgestaltung der Koordinatenmessmaschine 10 ist die Erfindung nicht beschränkt auf einen Portalaufbau wie in Figur 1 dargestellt. Für die Erfindung geeignet ist vielmehr jede bekannte Art von Koordinatenmessmaschinen, welche eine Objektoberflächenvermessung mit einem optischen Sensor ermöglicht (vgl. Figs. 5-6).

Die Koordinatenmessmaschine 10 weist ausserdem eine Steuerungs- und Verarbeitungseinheit (= Steuerungseinheit; nicht gezeigt), mit einem Prozessor auf. Mittels der Steuerungs- und Verarbeitungseinheit werden insbesondere die Antriebe der Koordinatenmessmaschine 10 angesteuert und die Messdaten gespeichert und verarbeitet. Bevorzugt ist die Steuerungs- und Verarbeitungseinheit ausgebildet zur Ermöglichung einer vollautomatischen Vermessung von Objektoberflächen.

Für Zwecke direkter Benutzereingriffe oder direkter Benutzersteuerung kann die Steuerungs- und Verarbeitungseinheit auch mit einer Benutzer-Konsole verbunden sein, insbesondere Drahtlos z.B. via Funk oder WLAN. Erfindungsgemäss ist der Instrumententräger 19 dazu ausgebildet einen Druckkopf 20 aufzunehmen. In der gezeigten erfindungsgemässen Ausführungsform ist ein derartiger Druckkopf 20 an dem Instrumententräger 19 angeordnet. Mittels dieses Druckkopfs 20 kann das Objekt 25 "gedruckt" werden, d.h. das Objekt 25 kann (insbesondere Schichtweise) aufgebaut bzw. erstellt werden.

Hierzu wird der Druckkopf 20 in eine bestimmte Druckposition gebracht (mittels der Führungen und Antriebe) und in dieser Position beispielsweise ein zur Erzeugung des Objekts 25 vorgesehenes Material appliziert. Das Applizieren des Materials erfolgt insbesondere fortlaufend während einer Bewegung des Instrumententrägers entlang eines vorbestimmten Druckpfads. Die Druckposition und der Druckpfad für die Positionierung des Instrumententrägers 19 bzw. des Druckkopfs 20 sind z.B. basierend auf einem digitalen Modell für das zu produzierende Objekt 25 ermittelt und werden gesteuert durch die Steuerungs- und Verarbeitungseinheit angefahren. Auch das Applizieren des Materials wird durch diese Einheit gesteuert. Hierbei werden insbesondere die Durchflussmenge und der Sprühdruck für das Applizieren (z.B. durch Aussprühen) des Materials und die Geschwindigkeit für die Bewegung des Instrumententrägers 19 gesteuert.

Das Objekt 25 wird beispielsweise direkt auf dem Tisch (d.h. der Basis) der Koordinatenmessmaschine 10 gedruckt, wobei der Tisch hierfür über eine für das Material geeignete Anti-Haft-Beschichtung verfügt.

Der schichtweise Aufbau des Objekts 25 wird dabei z.B. dadurch realisiert, dass eine erste (Grund-) Schicht aufgebracht wird, deren Schichtdicke abhängt vom Materialdurchsatz des Druckkopfs 20 und der relativen Bewegungsgeschwindigkeit des Druckkopfs 20 (relativ zum Objekt 25), und die nächste Schicht mit einem bestimmten Zeitversatz auf die erste Schicht aufgebracht wird. Der Zeitversatz kann dabei derart gewählt werden, dass die erste Schicht bereits leicht "getrocknet" ist, insbesondere beginnt leicht auszuhärten oder zu vernetzen, jedoch noch derart beschaffen ist, dass zwischen der ersten Schicht und der nächsten Schicht eine Verbindung (z.B. durch chemische Reaktion oder physikalisch Effekte) entsteht und dadurch ein dauerhaft festes und einstückiges Objekt 25 produzierbar ist.

Für das oben genannte Drucken (= Aufbauen) des Objekts 25 verfügt die Koordinatenmessmaschine 10 über einen entsprechenden Druckmodus (= Objektaufbaumodus), während dessen Ausführung der Druckkopf 20 an dem Instrumententräger 19 befestigt ist. Der Druckkopf 20 kann an dem Instrumententräger 19 modular befestigt oder davon abgelöst werden. Somit kann der Druckkopf 20 beispielsweise durch einen Messsensor ausgetauscht werden und in einem entsprechenden Messmodus das Objekt 25 vermessen werden.

Für ein solches Austauschen des Werkzeugs an dem Instrumententräger 19 kann eine Austauschstation mit einer Mehrzahl von Aufnahmen für die verschiedenen Werkzeuge vorgesehen sein.

Erfindungsgemäss können mit der Koordinatenmessmaschine 10 damit beliebige dreidimensionale Geometrien (= Werkstücke, Objekte), insbesondere mit Hinterschnitten, generiert werden.

Fig. 2 zeigt eine weitere Ausführungsform einer erfindungsgemässen Koordinatenmessmaschine 10. Hierbei handelt sich analog zu Fig. 1 um eine Portal-Maschine mit Basis 12, Portalträgern, Brücke 15 und Z-Säule 18. Ferner ist wiederum eine Führungs- und Antriebseinheit für die Bereitstellung einer Bewegung des Instrumententrägers 19 relativ zur Basis 12 in drei Richtungen (X-, Y- und Z-Richtung) vorgesehen.

Der Instrumententräger 19 ist dabei schwenkbar ausgeführt, wobei zwei Druckeinheiten 21a-b zur Materialapplikation an diesem angeordnet sind. Die beiden Druckeinheiten 21a-b können alternativ zu einem gemeinsamen Druckkopf zusammengefasst sein (hier nicht gezeigt), so dass der Druckkopf an dem Instrumententräger 19 angeordnet ist und die Druckeinheiten 21a-b an dem Druckkopf vorgesehen und insbesondere schwenkbar sind.

Bei den Druckeinheiten 21a-b handelt es sich um eine Grobapplikations-Druckeinheit 21a und eine Feinapplikations-Druckeinheit 21b, wobei mittels der Grob-Druckeinheit 21a eine Grundstruktur des Objekts 25 aufbaubar bzw. druckbar ist, d.h. das Objekt kann in seiner groben Form mittels dieser Einheit 21a erstellt (vorgefertigt) werden. Nach der Erstellung der Grundstruktur ist das zu produzierende Objekt 25 noch zu finalisieren um beispielsweise die gewünschten Genauigkeitsanforderungen zu erfüllen. Hierfür ist mit der Feindruckeinheit 21b ein entsprechender Feinapplikationsschritt ausführbar, bei welchem insbesondere die Oberfläche und/oder kleine Strukturen des Objekts 25, also der bereits bestehenden Grundstruktur des Objekts 25, anpassbar und mit grösserer Genauigkeit definierbar sind.

Die Grobapplikations-Druckeinheit 21a weist hierfür insbesondere ein derartiges Design auf, dass verglichen mit der Feinapplikations-Druckeinheit 21b einerseits ein grösserer Materialdurchsatz (ausbringbares Material pro Zeiteinheit), jedoch eine dadurch bedingte geringere Genauigkeit hinsichtlich der positionsmässigen Applikation des Materials erzielbar ist.

In diesem Zusammenhang weisen die Druckeinheiten beispielsweise unterschiedliche Düsenquerschnitte (= Austrittsöffnung für das Material an der Druckeinheit) auf und/oder werden mit unterschiedlichem Druck beaufschlagt, d.h. das Material wird mit unterschiedlichem Druck durch die jeweilige Druckeinheit geführt und ausgebracht.

Je nach Prozessschritt (Grob- oder Feinapplikation) wird die jeweilige für diesen Schritt vorgesehene Druckeinheit 21a oder 21b derart ausgerichtet, dass das Material in einem vorbestimmten Winkel relativ zur Basis 12 appliziert wird. Je nach Aufbaufortschritt für das Objekt 25 wird die jeweilige Druckdüse insbesondere in einem definierten Winkel zur bereits erzeugten Oberfläche des Objekts 25, insbesondere orthogonal, ausgerichtet.

Mit den durch die beiden Druckeinheiten 21a-b zur Verfügung stehenden unterschiedlich feinen Applizierungsstufen kann zum einen ein schnelles Aufbauen der Grundstruktur des Objekts 25 erfolgen und durch das Feinapplizieren zudem die Oberfläche mit einer vergleichsweise geringen Rauhigkeit gestaltet werden. Auch bezüglich der Formpräzision des resultierenden Objekts kann dadurch eine deutliche Verbesserung erreicht werden, da insbesondere der Effekt des thermischen Schrumpfens - bewirkt durch ein Abkühlen des Materials nach Applizierung - vermindert bzw. vermieden werden kann.

Gemäss einer speziellen Ausführungsform (hier nicht gezeigt) kann der Materialaustritt der Feinapplikations-Druckeinheit 21b zur homogenen und möglichst umfassenden Verteilung des Materials kugelförmig ausgebildet sein.

Ferner ist ein Materialbehälter 30 bzw. ein Materialreservoir 30 vorgesehen, in welchem das Material, aus dem das Objekt 25 produziert werden soll, bereitgehalten wird bzw. bevorratet ist. Diese Materialbereitstelleinheit 30 ist durch eine Materialführung 31, z.B. eine isolierte und/oder temperierte Schlauchleitung, mit der Koordinatenmessmaschine 10 verbunden. Die Koordinatenmessmaschine 10 weist zur Materialführung eine Rohrleitung 32 auf, die mit dem Instrumententräger 19 verbunden ist und somit den Materialtransport von der Materialbereitstelleinheit 30 über den Instrumententräger 19 bis zum Druckkopf bzw. den jeweiligen Druckeinheiten 21a-b bereitstellt. Die Rohrleitung 32 kann - wie hier gezeigt - durch den Wagen 16 so geführt sein, dass bei einer Bewegung der Z-Säule 18 die Rohrleitung 32 entsprechend in Z-Richtung mitgeführt wird.

Der Druckkopf bzw. die Druckeinheiten 21a-b sind dafür derart gestaltet, dass bei einer Anordnung des Druckkopfs bzw. die Druckeinheiten 21a-b zwischen Instrumententräger und Druckeinheit eine Verbindung für den Materialtransport vorliegt. Beispielsweise kann hierfür ein modular lösbares Stecksystem vorgesehen sein.

Durch die Vorsehung eines von der CMM 10 strukturell separierten Materialbehälters 30 (eine Verbindung besteht im Wesentlichen allein durch die Materialführung 31) wird vorteilhafterweise ein durch die Temperierung des zu applizierenden Rohmaterials (in dem Materialbehälters 30) möglicher Wärmeeintrag auf die Gerätestruktur der CMM 10 verringert bzw. gänzlich vermieden. Dadurch können wärmebedingte Positionierungsfehler entsprechend verringert bzw. gänzlich vermieden werden.

Gemäss einer alternativen Ausführungsform kann die Rohrleitung 32 direkt mit dem Druckkopf oder den jeweiligen Druckeinheiten 21a-b verbunden sein und dadurch die Materialbereitstellung direkt, d.h. ohne einen Durchtransport durch den Instrumententräger 19, erfolgen.

Ferner ist die Schlauchzuleitung 31 derart aufgehängt und wird derart relativ zu der Basis 12 aktiv oder passiv geführt (insbesondere analog zur Bewegung der Z-Säule 18), dass der CMM 10 dadurch ein möglichst geringes Gewicht beaufschlagt wird und damit der Fehlereinfluss hinsichtlich der präzisen Positionierung des Instrumententräger 19 durch die Materialzufuhr möglichst gering gehalten, insbesondere vermieden werden kann.

Ein Druckkopf, der die beiden Druckeinheiten 21a-b aufweist, verfügt insbesondere über einen Umschaltmechanismus, mittels welchem der Weg des Materialflusses, d.h. hin zu der Grobapplikations-Druckeinheit 21a oder hin zu der Feinapplikations-Druckeinheit 21b, gesteuert und umgeschaltet werden kann. Alternativ kann der Instrumententräger - für die direkte Anordnung der Druckeinheiten 21a-b an diesem - über eine entsprechende Materialflusssteuerungseinheit verfügen.

Die Materialbereitstelleinheit 30 und/oder die Koordinatenmessmaschine 10 weisen für die Materialbeförderung insbesondere elektronisch steuerbare Förderungsmittel, insbesondere eine Pumpe, auf.

Als Material zum Aufbau des Objekts 25 wird beispielsweise verflüssigter Kunststoff (z.B. ein Polymer oder Polymergemisch) oder verflüssigtes Metall eingesetzt, welches bei Abkühlung verfestigt. Der Grad der Verflüssigung, d.h. die Viskosität, des Materials kann beispielsweise durch definierte Temperierung des Materials eingestellt werden. Diese wird insbesondere in Abhängigkeit von den zu erzielenden Eigenschaften oder von der Formgebung des resultierenden Objekts 25 eingestellt.

Die vorliegende Erfindung ist nicht auf das oben beschriebene generative Aufbauen von Objekten mit der Koordinatenmessmaschine mittels Materialapplikation beschränkt, sondern betrifft ebenso eine Koordinatenmessmaschine zum Objektaufbau mittels alternativen Methoden wie beispielsweise selektives Lasersintern oder lokales Materialaushärten, z.B. mittels UV-Strahlung.

Der Instrumententräger 19 der CMM 10 ist z.B. für ein auszuführendes Lasersintern mit einem Laseremitter ausgerüstet, so dass ein Laserstrahl präzise auf einen Punkt ausgerichtet und entlang eines Pfads geführt werden kann. Ferner ist zusätzlich eine Einheit zur Materialbereitstellung mittels Erzeugen einer dünnen Pulverschicht, z.B. mit einer Rakel, vorgesehen. Damit wird die dünne Pulverschicht insbesondere vollflächig hergestellt und anschliessend lokal mittels des Lasers verfestigt, d.h. die Partikel werden lokal gesintert oder verschmolzen. Durch ein wiederholtes und aufeinender aufbauendes (z.B. durch Absenken der zuletzt verfestigten Struktur) Ausführen dieser Schritte kann dadurch das Werkstück produziert werden. Als pulverförmiger Ausgangsstoff wird z.B. Polyamid, ein kunststoffbeschichteter Formsand oder ein Metall- oder Keramikpulver verwendet.

Die Strahlquelle für den Laseremitter kann beispielsweise extern, d.h. nicht auf der CMM 10, vorgesehen sein, wobei die Laserstrahlung mittels einer optischen Faser zu dem Laseremitter am Instrumententräger 19 geführt wird.

Für eine lokale Materialaushärtung wird entsprechend z.B. eine UV-Strahlquelle an dem Instrumententräger 19 angeordnet, deren Strahlung positionsgenau ausrichtbar und fokussierbar ist. Das Produktionsmaterial liegt ferner beispielsweise als Flüssigkeit in einem derartigen Behälter vor, dass die UV-Strahlung mit der Flüssigkeit in Wechselwirkung treten kann. In Analogie zu dem schichtweisen Aufbau beim Lasersintern kann auch hier eine schichtweise Aushärtung des Materials mittels lokaler Einstrahlung der UV-Strahlung erzielt werden und durch ein schrittweises Auftauchen und UV-Härten des verfestigten Materials aus der Flüssigkeit dadurch das Objekt erzeugt werden.

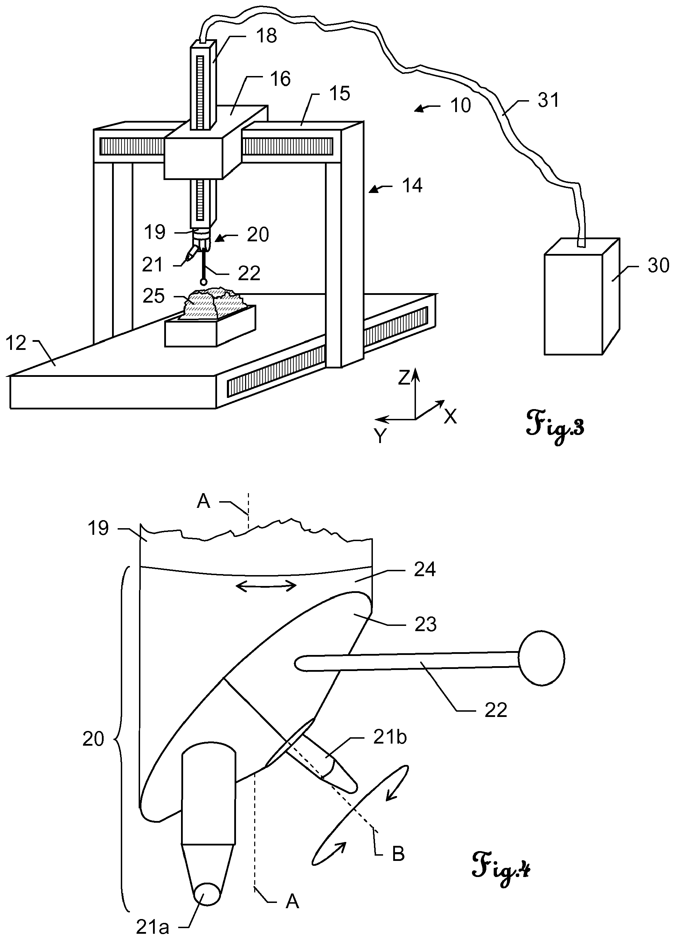

Fig. 3 zeigt eine weitere Ausführungsform einer erfindungsgemässen Koordinatenmessmaschine 10. Auch hier handelt sich analog zu Figs. 1 und 2 um eine Portal-Maschine mit Basis 12, Portalträgern, Brücke 15 und Pinole 18 (= Z-Säule). Zudem ist wiederum eine Führungs- und Antriebseinheit für die Bereitstellung einer Bewegung des Instrumententrägers 19 relativ zur Basis 12 in drei Richtungen (X-, Y- und Z-Richtung) vorgesehen.

Ausserdem ist eine Materialbereitstellungseinheit 30 mit Zuleitung 31 zu der CMM 10 vorgesehen. Die Zuleitung 31 ist mit der Pinole 18 verbunden, sodass das Druckmaterial im Inneren der Pinole 18 zum Instrumententräger 19 führbar ist. Alternativ, jedoch hier nicht gezeigt, kann die Zuleitung 31 an einer geeigneten Stelle mit dem Portalaufbau 14 verbunden sein, wobei der Portalaufbau 14, der Wagen 16 und die Pinole 18 jeweils ein Führungssystem für das Material aufweisen und die Führungssysteme derart zusammenwirken, dass das Material im Inneren dieser Strukturen zum Instrumententräger führbar ist, insbesondere in jeder beliebigen Stellung der Strukturen zueinander.

Der Instrumententräger 19 ist derart ausgebildet, dass das Material vermittels ebenfalls zu diesem Zweck ausgebildeter Materialführungsmittel zu dem Druckkopf 20 führbar und über die Druckeinheit 21 zum Objektaufbau applizierbar ist.

Der Druckkopf 20 weist zudem einen Tastsensor 22 auf. Mit diesem Sensor 22 kann das Objekt 25 oder einzelne Messpunkte an dem Objekt 25 durch Antasten und Positionsbestimmen für den Messtaster 22 beim Antasten vermessen werden.

Ein solches Vermessen des Objekts 25 kann beispielsweise erfolgen, um die Dimensionen des Objekts 25 zu erfassen und diese mit Solldaten für das Objekt 25 zu vergleichen. Die Solldaten können z.B. durch ein digitales Modell des Objekts 25 bereitgestellt sein. Dadurch kann beim generativen Aufbau des Objekts 25 die bereits erzeugte Form und Grösse überprüft werden. Dies erfolgt vorzugsweise in einzelnen Prozesszwischenschritten, d.h. das Objekt 25 wird bis zu einer definierten Stufe erstellt, dann erfolgt das Vermessen des Objekts 25 mit dem Sensor 22 und anschliessend wird in Abhängigkeit von dem Vergleich der Messdaten mit den Solldaten das Objekt weiter Aufgebaut und/oder es werden Korrekturen an dem bereits zumindest teilweise produzierten Objekt 25 vorgenommen (z.B. durch Abfräsen oder zusätzliches Aufbringen von Material durch das Modifikationswerkzeug).

Durch dieses Vermessen des Objekts 25 kann die Formgenauigkeit der resultierenden Objekts 25 fortlaufend überwacht und verbessert werden.

Gemäss einer alternativen Ausführung (hier nicht gezeigt) weist der Druckkopf 20 anstelle oder zusätzlich zu dem Tastsensor 22 einen kontaktlos messenden, optischen Sensor auf, mittels welchem ein Objekt vermessen werden kann. Als optischer Sensor kann z.B. ein interferometrisch messender Sensor, ein Linien-Scanner oder ein Triangulationssensor vorgesehen werden.

Insbesondere durch ein scannendes Abtasten der Objektoberfläche kann vergleichsweise schnell eine das Objekt repräsentierende Punktwolke erzeugt werden, wodurch die Struktur, Form und Dimension des Objekts sehr präzise bestimmt vorliegen. Das Überprüfen des Fortschritts bezüglich des Objektaufbaus kann somit auch durch den optischen Sensor erfolgen.

Zudem kann durch das präzise optische Erfassens eines Objekts aus den Messdaten ein digitales Modell (z.B. CAD-Modell) des abgetasteten Objekts erzeugt werden und basierend auf diesem digitalen Modell ein entsprechendes Objekt gedruckt werden. Die erfindungsgemässe Koordinatenmessmaschine 10 mit derartigen Funktionalitäten vereint damit das Erfassen des Objekts, Erzeugen des digitalen Modells und das Erstellen eines entsprechenden Objekts basierend auf dem digitalen Modell und ist damit als 3D-Kopierer für beliebige Objekte einsetzbar. Beispielsweise kann in einem ersten Bereich der Basis 12 das zu kopierende Objekt platziert werden und in einem zweiten Bereich der Basis ein Objekt aufgebaut werden, das insbesondere hinsichtlich Form und Grösse dem Ausgangsobjekt entspricht. Hierfür wird das bereitgestellt (zu kopierende) Objekt zunächst optisch Abgetastet und anschliessend durch Materialapplikation an einer anderen Stelle aufgebaut.

Die Objektkopie kann insbesondere mit einem alternativen Massstab, d.h. grösser oder kleiner als das Originalobjekt, erstellt werden. Hierfür kann das digitale Modell mit einem gewünschten Faktor skaliert werden.

Ausserdem kann vor dem Erstellen der 3D-Kopie eine Modifikation der Modelldaten erfolgen, wodurch eine angepasste 3D-Kopie des Objekts produzierbar ist.

Fig. 4 zeigt eine Ausführungsform eines Druckkopfes 20 für eine Koordinatenmessmaschine gemäss der Erfindung. Der Druckkopf 20 ist an dem Instrumententräger 19 der CMM relativ zu diesem um eine Achse A motorisiert schwenkbar angeordnet.

Der Druckkopf 20 weist drei Werkzeuge auf, nämlich eine erste Druckeinheit 21a, eine zweite Druckeinheit 21b und einen Messtaster 22. Gemäss alternativen Ausführungen kann der Druckkopf 20 derart ausgestaltet sein, dass dieser zwei oder mehr als drei Werkzeuge tragen kann. Die Werkzeuge des Druckkopfes 20 sind ferner an einem Werkzeugträger 23 angeordnet, der mit einer Druckkopfbasis 24 verbunden ist. Der Werkzeugträger 23 ist um die Achse B relativ zu der Druckkopfbasis 24 schwenkbar angeordnet.

Mit einem solchen Druckkopf 20 kann durch entsprechendes Schwenken des Werkzeugträgers 23 jeweils dasjenige Werkzeug in eine Verwendungsposition gebracht werden, welches für den auszuführenden Prozessschritt - z.B. Objektaufbau oder Objektvermessung - einzusetzen ist. Beispielsweise kann in der gezeigten Ausrichtung des Werkzeugträgers 23 ein Objektaufbau durch eine Materialapplikation mittels der ersten Druckeinheit 21a erfolgen. Durch ein Drehen des Werkzeugträgers 23 um 120° um die Achse B (gegen den Uhrzeigersinn) ist der Messtaster 22 in die Einsatzposition bringbar und eine Vermessung des Objekts kann erfolgen.

Für die Materialzuführung zu den beiden Druckeinheiten 21ab ist der Druckkopf 20 derart ausgebildet, dass das Material im Inneren des Druckkopfgehäuses zu den Druckeinheiten 21a-b führbar ist, insbesondere durch Schlauchleitungen, die im gezeigten Einsatzzustand sowohl mit dem Instrumententräger 19 als auch mit den Druckeinheiten 21a-b verbunden sind.

Fig. 5 zeigt eine weitere Ausführungsform einer erfindungsgemässen Koordinatenmessmaschine 40 (CMM), wobei die CMM 40 eine Basis 42 und Strukturkomponenten 44,46,48 zur Bereitstellung einer Bewegung des Messkopfs 19 (= des

Instrumententrägers 19) relativ zur Basis 42 aufweist. Hierfür sind die Strukturkomponenten 44,46,48 mittels Antriebseinheiten (nicht gezeigt), die die Komponenten 44,46,48 verbinden, relativ zueinander bewegbar.

Am Instrumententräger 19 ist ein Druckkopf 20 angeordnet, wobei dieser hier starr verbunden ist, jedoch gemäss alternativen Ausführungsformen eine schwenkbare Anordnung an dem Instrumententräger 19 oder ein schwenkbarere Druckkopf realisierbar sind (vgl. Figs. 2-4 und 6). Der Druckkopf 20 verfügt über eine Düse, durch welche die Materialapplikation zum Objektaufbau erfolgt. Das Objekt 25 ist dabei wiederum basierend auf einem vorliegenden dreidimensionalen Modell, z.B. CAD-Modell, druckbar. Die Objektdaten liegen beispielsweise in einer Speichereinheit der CMM 10 vor. In diesem Zusammenhang erfolgt für die Erstellung des Objekts 25 eine schichtweise Materialapplikation, sodass das resultierende Objekt 25 durch die Gesamtheit der erzeugten Schichten repräsentiert ist.

Das Produktionsmaterial (z.B. flüssiger Kunststoff oder Kunststoffgranulat, das für die Objektfertigung vorbehandelt wird), das durch die Düse appliziert wird, wird in einem geeigneten Behältnis innerhalb des Fusses 44 der CMM 40 vorgehalten und mittels eines inneren Fördersystems über die anderen Strukturkomponenten 46,48 bis zum Instrumententräger 19 geführt. Das Fördersystem weist hierfür insbesondere flexible Schlauchverbindungen und zumindest einen Druckerzeuger, z.B. eine Pumpe, auf.

Zudem weisst die CMM 40 einen Referenzkörper 27 auf, dessen Position innerhalb des Messvolumens sowie dessen Form und Grösse exakt bekannt und insbesondere in der Speichereinheit der CMM 40 hinterlegt sind. Durch ein Vermessen dieses Referenzkörpers 27 können Messfehler der CMM 10 und die Positionierung des Messkopfs 19 (Instrumententräger), z.B. vor oder während eines Messprozesses, korrigiert bzw. kompensiert werden. Für eine solche Referenzmessung wird anstelle des Druckkopfes 20 oder zusätzlich dazu ein Messsensor an dem Messkopf 19 angeordnet. Der Messsensor ist hierfür beispielsweise als Messtaster oder kontaktlos messender (optischer) Sensor ausgebildet.

Der Referenzkörper 27 kann insbesondere derart mit der CMM 40 verbunden sein (oder auch strukturell getrennt von der CMM 40 angeordnet sein), dass dessen relative Position bezüglich eines CMM-Koordinatensystems stabil gegeben ist, wobei dieser insbesondere temperaturinvariant positioniert und/oder ausgebildet ist. Der Referenzkörper 27 und/oder dessen Befestigung (Aufnahmeeinheit), insbesondere auch zumindest teilweise die Basis 42 der CMM 40, kann z.B. aus Zerodur (in einem bestimmten Temperaturbereich temperaturinvariantes Material) gefertigt sein. Eine solche Anordnung stellt eine stabile Referenz auch bei einer durch die Materialapplikation gegebenenfalls auftretende Wärmeinwirkung auf die CMM 40 bereit.

Ein oben beschriebener Referenzierungsschritt kann ferner vor und/oder während eines Fertigungsprozesses des Objekt 25 erfolgen, wobei insbesondere das schichtweise Aufbauen unterbrochen wird und die Vermessung des Referenzkörpers 27 innerhalb eines bestimmten Zeitfensters erfolgt, damit die Qualitätseigenschaften des resultierenden Objekts 25 durch die Unterbrechung des Aufbauvorgangs nicht nachteilig beeinflusst werden.

Die Positionsreferenzierung für die Führungsachsen und den Messkopf 19 (= Instrumententräger) mittels des Vermessens des Referenzkörpers 27 ist insbesondere im Hinblick auf die Wärmeentwicklung und damit gegebenenfalls verbundene Temperaturänderung der Maschinenkomponenten 44,46,48 vorteilhaft. Die Materialapplikation von flüssigem Kunststoff oder Metall, der bzw. das hierfür typischerweise bei relativ zur Umgebungstemperatur deutlich erhöhten Temperaturen vorliegt und appliziert wird, kann zu einer ebenfalls deutlichen Temperaturerhöhung der Komponenten 44,46,48 und/oder des Messkopfs 19 führen und dadurch eine thermisch bedingte Ausdehnung von zumindest einer der Komponenten und somit ein Positionierungsfehler verursachen. Zur Messung und Überwachung der Temperaturen an der CMM 40 können z.B. Temperatursensoren an den relevanten Komponenten vorgesehen sein.

Gemäss einer speziellen Ausführungsform der Erfindung kann nach einer gewissen Applikationszeit oder einer bestimmten Maschinenbetriebszeit ein Vermessen das Referenzkörpers 27 erfolgen (insbesondere automatisch), wobei Messdaten für den Körper 27 abgeleitet werden und diese Daten mit einer Sollpositionierung für den Instrumentenhalter 19 bzw. den Messsensor am Halter 19 verglichen werden und basierend auf diesem Vergleich eine Re-Kalibrierung bzw. Referenzierung der relativen Positionierung der Maschinenkomponenten 44,46,48 zueinander durchgeführt werden. Dadurch lassen sich thermisch bedingte Messfehler kompensieren. Demzufolge wird dadurch auch die Genauigkeit hinsichtlich der Objektproduktion gesteigert.

Alternativ zur derartigen Durchführung nach einer bestimmten Zeit, kann auch ein Kalibrieren in Anhängigkeit von durch die Temperatursensoren bereitgestellten Informationen erfolgen. Wird z.B. ein kritischer (z.B. ein für die präzise Führung oder für die Form der Maschinenkomponenten kritischer) Temperaturwert überschritten, so erfolgt automatisch eine Vermessung des Referenzkörpers 27 und entsprechende Referenzierung des Systems.

Fig. 6 zeigt eine weitere Ausführungsform einer erfindungsgemässen Koordinatenmessmaschine 50 mit einem Delta-Roboter 51 als eine die Bewegung des Instrumententrägers 19 (= Messkopf) bereitstellende Einheit ("Delta Measuring Maschine", Delta-MM 50).

Der Delta-Roboter 51 weist einen stationären Rahmen 53, welcher eine (ebenfalls stationäre) Roboterbasis 54 trägt, und drei Arme 56, so genannte kinematische Ketten, auf. Der Rahmen 53 ist typischerweise verkörpert durch eine massive Konstruktion, wird jedoch zur besseren Übersicht hier rein schematisch dargestellt.

Jeder Arm 56 des Delta-Roboters 51 weist zwei Teile 58,59, auf, die zum einen durch ein Gelenk 60 miteinander und zudem durch jeweilige Gelenke sowohl mit der stationären Basis 54 als auch mit dem Instrumententräger 19 verbunden sind.

Eine Bewegung des Instrumententrägers 19 ist beispielsweise durch einen an der Roboterbasis 54 angeordneten Motor, mittels dem die Länge eines mit dem Instrumententräger 19 verbundenen Seils einstellbar und veränderbar ist, realisierbar. Typischerweise ist hierfür für jeden Arm 56 eine entsprechender Motor und ein Seilverbindung zum Instrumententräger 19 vorgesehen. Alternativ kann der Instrumententräger 19 mittels einer Hydraulik definiert bewegt werden.

Allgemein bekannte weitere Ausgestaltungen für eine Koordinatenmessmaschine mit Delta-Roboter sind beispielsweise aus der EP 2705935 A1 (Anmeldenummer EP12183806.4, eingereicht am 11. September 2012) bekannt.

Der Instrumententräger 19 ist zum Tragen eines Messsensors, einer Druckeinheit oder - wie hier gezeigt - eines Druckkopfs 20 mit Messsensor 22 und Druckeinheit 21 ausgebildet. Zudem ist der Instrumententräger 19 derart ausgebildet, dass der Messsensor, der Druckkopf oder andere Werkzeuge modular austauschbar sind. Gemäss obigen Ausführungen können die am Druckkopf 20 angeordneten Sensoren und/oder Werkzeuge um mehrere Achsen schwenkbar ausgeführt sein.

Die Materialführung hin zum Druckkopf 20 ist hier durch eine flexible Hohlleitung 55 von der Roboterbasis 54 zum Instrumententräger 19 sichergestellt. Gemäss alternativen Ausführungen kann der Materialtransport entlang eines oder mehrer Arme 53 mittels entsprechend vorgesehener Rohrleitungen und gelenkartigen oder flexiblen Rohrverbindungsstücken an den jeweiligen

Maschinengelenken 60 erfolgen. Die Materialbereitstellung an der Roboterbasis 54 kann ebenfalls mittels entsprechender Hohlleitung realisiert sein.

Die Delta-MM 50 weist ferner eine Steuerungs- und Verarbeitungseinheit zur Steuerung eines Objektaufbauvorgangs (= schichtweises Drucken des Objekts 25) oder eines Messvorgangs und zur Verarbeitung von z.B. während einer Objektvermessung erfasster Daten auf. In einem Objektaufbaumodus wird der Druckkopf 20 somit gesteuert durch die Steuerungs- und Verarbeitungseinheit entlang eines vorbestimmten Pfads (der Pfad ist z.B. aus einem digitalen Modell des Objekts 25 ableitbar) geführt. Dabei werden Schichten mit jeweils einer definierten Dicke von einem zur Fertigung des Objekts 25 vorgesehenen Material aufgedruckt (vorzugsweise auf einen dafür ausgebildeten Tisch - nicht gezeigt). Nach einer Aushärtung des applizierten Materials ist typischerweise der Hauptfertigungsschritt des Objekts 25 abgeschlossen. Diese Aushärtung kann beispielsweise unter normalen Raumbedingungen nach einer gewissen Zeitdauer abgeschlossen sein (chemische Reaktion des Materials mit Raumluft). Alternativ oder zusätzlich kann das gedruckte Objekt 25 für eine optimierte Aushärtung für eine bestimmte Zeitdauer mit einer definierten Temperatur und/oder in einer definierten Atmosphäre temperiert werden, z.B. in einem Ofen.

An dem Instrumententräger 19 ist zum Versetzen bzw. zum Transport des Objekts 25 ein Transportwerkzeug (nicht gezeigt), insbesondere ein Greifwerkzeug, befestigbar. Das gedruckte Objekt 25 kann damit gegriffen werden und z.B. in dem Ofen (nicht gezeigt) zur Aushärtung platziert werden. Mittels z.B. eines solchen Greifers kann generell jedes Objekt 25 - sei es die zu kopierende Vorlage, die mit der Delta-MM 50 vermessen wird, oder das durch Drucken gefertigte Objekt 25 (z.B. die Kopie der Vorlage) - innerhalb des Messvolumens von einer ersten Position und Ausrichtung in eine zweite Position und Ausrichtung versetzt werden.

## Patentansprüche

1. Verfahren zum Aufbau eines Objekts (25) mittels einer Koordinatenmessmaschine (10,40,50) mit einem Instrumententräger (19), wobei
• die Koordinatenmessmaschine (10,40,50) zumindest eine Steuerungseinheit und eine Antriebseinheit zur gesteuerten Bewegung des Instrumententrägers (19) relativ zu einer Basis (12,42) aufweist und
• der Instrumententräger (19) zum Tragen zumindest eines, insbesondere jeweils modular anbringbaren, Messsensors (22) und Produktionswerkzeugs (20,21,21ab) sowohl jeweils alleine oder in Kombination ausgebildet ist und
wobei im Rahmen des Verfahrens basierend auf digitalen Modelldaten, die das Objekt (25) repräsentieren, erfolgen
• ein gesteuertes Führen und insbesondere Ausrichten des dabei von dem Instrumententräger (19) getragenen Produktionswerkzeugs (20,21,21a-b) und
• ein in Abhängigkeit von einer jeweiligen Produktionswerkzeugposition und insbesondere -ausrichtung gesteuertes positionsgenaues Applizieren und/oder Fixieren eines Materials vermittels des Produktionswerkzeugs (20,21,21a-b), insbesondere wobei das Aufbauen des Objekts (25) durch schichtweises Materialapplizieren und/oder -fixieren erfolgt,
und wobei die Basis (12,42) eine bezüglich des Materials geeignete Anti-Haft-Beschichtung aufweist.

2. Verfahren nach Anspruch 1,
**gekennzeichnet durch**
ein Ausführen eines Oberflächenabtastens mit einem Positionsbestimmen für wenigstens einen Messpunkt mittels des von dem Instrumententräger (19) getragenen, insbesondere an dem Produktionswerkzeug (20,21,21a-b) angeordneten, Messsensors (22), insbesondere wobei der Messsensor (22) als taktiler oder optischer Sensor ausgebildet ist.

3. Verfahren nach Anspruch 2,
**dadurch gekennzeichnet, dass**
der Messpunkt verkörpert ist durch einen Oberflächenpunkt
• des zumindest teilweise aufgebauten Objekts (25) und das Materialapplizieren im Rahmen des Aufbauens des Objekts (25) in Abhängigkeit von der Position des Messpunkts und von den digitalen Modelldaten für das Objekt (25) automatisch gesteuert angepasst, insbesondere korrigiert, wird oder
• eines Vorlageobjekts und die digitalen Modelldaten in Abhängigkeit von der Vermessung des Vorlageobjekts erzeugt und/oder aktualisiert werden oder
• eines vorbekannten Referenzkörpers (27) und im Rahmen des Verfahrens ein Aktualisierungsschritt erfolgt mit einem Referenzieren der Instrumententrägerposition anhand der an dem Referenzkörper (27) bestimmten Position für den Messpunkt.

4. Verfahren nach einem der Ansprüche 1 bis 3,
**dadurch gekennzeichnet, dass**
das Aufbauen des Objekts (25) durch das positionsgenaue Materialapplizieren und/oder -fixieren mit einer Genauigkeit entsprechend dem Positionsbestimmen für den wenigstens einen Messpunkt im Rahmen des durch die Koordinatenmessmaschine ausführbaren Oberflächenabtastens erfolgt, insbesondere mit einer entsprechenden Positionierungsgenauigkeit für das Produktionswerkzeug (20,21,21a-b).

5. Verfahren nach einem der Ansprüche 1 bis 4,
**gekennzeichnet durch**
• ein Positionieren eines definierten Rohkörpers in bestimmter Ausrichtung und Positionierung bezüglich der Basis (12,42) und innerhalb eines Messvolumens, das **durch** die Bewegbarkeit des Instrumententrägers (19) definiert ist, insbesondere wobei das Positionieren mittels eines an dem Instrumententräger oder Produktionswerkzeug vorgesehenen Transportwerkzeugs erfolgt, und
• das Aufbauen des Objekts (25) mittels positionsgenauen Materialapplizierens vermittels des Produktionswerkzeugs (20,21,21a-b) an den Rohkörper, und/oder
• das Produktionswerkzeug (20,21,21a-b) entlang eines definierten Pfades geführt wird, wobei der Pfad aus den digitalen Modelldaten abgeleitet ist, und/oder
• die Koordinatenmessmaschine (10,40,50) ausgebildet ist nach einem der Ansprüche 8 bis 14.

6. Verfahren nach einem der Ansprüche 1 bis 5,
**gekennzeichnet durch**
• ein Aufbauen einer Grundstruktur des Objekts (25) durch Grobapplikation des Materials mittels des Produktionswerkzeugs (20,21,21a-b) und
• ein Anpassen der Grundstruktur des Objekts (25) **durch** positionsgenaue Oberflächenmodifikation der zumindest teilweise aufgebauten Grundstruktur, insbesondere wobei im Rahmen des Anpassens der Grundstruktur erfolgt
• eine positionsgenaue Feinapplikation des Materials zur präzisen Oberflächenstrukturierung mittels des Produktionswerkzeugs (20,21,21a-b), insbesondere wobei das Produktionswerkzeug (20,21,21a-b) als Druckkopf (20,21,21a-b) ausgebildet ist oder zumindest einen Druckkopf (20,21,21a-b) aufweist, und/oder
• ein Oberflächenabtragen mittels eines Modifikationswerkzeugs, insbesondere Fräswerkzeug oder Bearbeitungslaser, wobei der Instrumententräger oder das Produktionswerkzeug das Modifikationswerkzeug trägt.

7. Verfahren nach Anspruch 6,
**dadurch gekennzeichnet, dass**
• für die Grobapplikation eine Grobapplikations-Druckeinheit (21a) vorgesehen ist und für die Feinapplikation eine Feinapplikations-Druckeinheit (21b) vorgesehen ist, wobei
□ die Grobapplikations-Druckeinheit (21a) und die Feinapplikations-Druckeinheit (21b) an dem Instrumententräger (19) angeordnet sind oder
□ das Produktionswerkzeug (20) die Grobapplikations-Druckeinheit (21a) und die Feinapplikations-Druckeinheit (21b) aufweist,
insbesondere wobei ein automatisches Wechseln der Verwendung der Druckeinheiten (21a-b) in Abhängigkeit von der auszuführenden Applizierung erfolgt, und/oder
• der Instrumententräger (19) in Abhängigkeit des Ausführens des Aufbauens oder des Anpassens der Grundstruktur derart ausgerichtet wird, dass das Produktionswerkzeug (20,21,21a-b) bzw. das Modifikationswerkzeug in einer für die Materialapplikation oder für die Oberflächenmodifikation vorgesehenen Arbeitsausrichtung relativ zur Objektoberfläche definiert ausgerichtet ist, insbesondere wobei der Instrumententräger (19) wenigstens zwei Druckköpfe (20,21) trägt.

8. Koordinatenmessmaschine (10,40,50) mit zumindest einem Instrumententräger (19), einer Basis (12, 42), einer Steuerungseinheit und einer Antriebseinheit zur gesteuerten Bewegung des Instrumententrägers (19) relativ zu der Basis (12,42), wobei
• der Instrumententräger (19) zum Tragen zumindest eines Messsensors (22) ausgebildet ist und
• die Koordinatenmessmaschine (10,40,50) einen Oberflächenabtastmodus zur Bestimmung von wenigstens einer Messpunktposition an einer Oberfläche durch Abtasten der Oberfläche mittels des dabei von dem Instrumententräger (19) getragenen Messsensors (22) bereitstellt,
**dadurch gekennzeichnet, dass**
• der Instrumententräger (19) ferner ausgebildet ist zum Tragen eines zur Materialapplikation und/oder -fixierung ausgebildeten Produktionswerkzeugs (20,21,21a-b) und
• die Koordinatenmessmaschine (10,40,50) einen dadurch definierten Objektaufbaumodus bereitstellt, dass in dessen Rahmen gesteuert basierend auf digitalen Modelldaten zumindest
□ das von dem Instrumententräger (19) dabei getragene Produktionswerkzeug (20,21,21a-b) führbar und insbesondere ausrichtbar ist und
□ vermittels des Produktionswerkzeugs (20,21,21a-b) Material in Abhängigkeit von einer jeweiligen Produktionswerkzeugposition und insbesondere -ausrichtung positionsgenau applizierbar und/oder fixierbar ist,
so dass durch Ausführung des Objektaufbaumodus, insbesondere gesteuert durch die Steuerungseinheit, das Objekt (25) basierend auf den digitalen Modelldaten, insbesondere schichtweise, aufbaubar ist, und
• die Basis (12,42) eine bezüglich des Materials geeignete Anti-Haft-Beschichtung aufweist.

9. Koordinatenmessmaschine (10,40,50) nach Anspruch 8, **dadurch gekennzeichnet, dass**
das Produktionswerkzeug (20,21,21a-b) ausgeführt ist als
• ein zur Materialapplikation ausgebildeter Druckkopf (20,21,21a-b) und/oder
• ein Laseremitter zur Emission eines Laserstrahls zur Materialfixierung, insbesondere durch Lasersintern.

10. Koordinatenmessmaschine (10,40,50) nach Anspruch 8 oder 9,
**dadurch gekennzeichnet, dass**
das Produktionswerkzeug (20) eine Grobapplikations-Druckeinheit (21a) und eine Feinapplikations-Druckeinheit (21b) aufweist, sowie insbesondere den Messsensor (22), insbesondere wobei bei Ausführung des Objektaufbaumodus
• in einer ersten Phase des Objektaufbaumodus eine Grundstruktur des Objekts (25) mit der Grobapplikations-Druckeinheit (21a) erstellt wird und
• in einer zweiten Phase des Objektaufbaumodus eine Oberflächenanpassung der Grundstruktur mittels der Feinapplikations-Druckeinheit (21b) erfolgt.

11. Koordinatenmessmaschine (10,40,50) nach einem der Ansprüche 8 bis 10,
**dadurch gekennzeichnet, dass**
das Produktionswerkzeug (20,21,21a-b) mit einer im Rahmen des Oberflächenabtastmodus bereitgestellten Positionierungsgenauigkeit für den Messsensor (22) führbar und positionierbar, insbesondere ausrichtbar,
ist.

12. Koordinatenmessmaschine (10,40,50) nach einem der Ansprüche 8 bis 11,
**dadurch gekennzeichnet, dass**
• ein definierter Rohkörper in einer bestimmten Ausrichtung und Positionierung bezüglich der Basis (12,42) und innerhalb eines Messvolumens, das durch die Bewegbarkeit des Instrumententrägers (19) definiert ist, platzierbar ist und das Objekt (25) durch die positionsgenaue Materialapplikation an den Rohkörper aufbaubar ist, insbesondere durch schichtweises Materialapplizieren,
und/oder
• die digitalen Modelldaten zumindest teilweise durch Ausführung des Oberflächenabtastmodus generierbar sind.

13. Koordinatenmessmaschine (10,40,50) nach einem der Ansprüche 8 bis 12,
**dadurch gekennzeichnet, dass**
• der Instrumententräger (19) ferner ausgebildet ist zum Tragen eines, insbesondere modulartig anbringbaren, Modifikationswerkzeugs, insbesondere Fräswerkzeug oder Bearbeitungslaser, und
• die Koordinatenmessmaschine (10,40,50) einen dadurch definierten Objektmodifikationsmodus aufweist, dass in dessen Rahmen, insbesondere durch dessen Ausführung, die Objektoberfläche mittels des von dem Instrumententräger (19) getragenen Modifikationswerkzeugs gesteuert bearbeitbar ist, insbesondere wobei ein Materialabtragen erfolgt, und/oder
• das Produktionswerkzeug (20) aufweist
□ den Messsensor (22) und/oder
□ eine das Modifikationswerkzeug verkörpernde Modifikationseinheit und/oder
□ eine Kühlungsdüse,
und/oder
• der Instrumententräger (19)
□ schwenkbar um mindestens eine Achse (A,B,X,Y,Z) ausgeführt ist und/oder
□ zum gleichzeitigen Tragen von zumindest dem Messsensor (22) und dem Produktionswerkzeug (20,21,21a-b) ausgebildet ist.

14. Koordinatenmessmaschine (10,40,50) nach einem der Ansprüche 8 bis 13,
**dadurch gekennzeichnet, dass**
die Koordinatenmessmaschine (10,40,50) Materialführungsmittel (18,31,32,55) zur Bereitstellung des Materials für den Aufbau des Objekts (25) aufweist, insbesondere eine rohrförmige Leitungsstruktur (31,32) und/oder eine temperierbare Rohranordnung, insbesondere wobei die Materialführungsmittel (18,31,32,55)
• mit dem Produktionswerkzeug (20,21,21a-b) verbunden sind und dadurch die Materialversorgung für das Produktionswerkzeug (20,21,21a-b) zur Materialapplikation bereitgestellt ist und/oder
• eine Isolations- oder Dämmvorrichtung hinsichtlich einer Reduktion der Wärmeabgabe, insbesondere Wärmeabstrahlung, aufweisen.

15. Computerprogrammprodukt, das auf einem maschinenlesbaren Träger gespeichert ist, zur Steuerung bzw. Ausführung eines Verfahrens nach einem der Ansprüche 1 bis 7, insbesondere wenn das Computerprogrammprodukt auf einer Steuerungs- und Verarbeitungseinheit einer Koordinatenmessmaschine (10,40,50) nach einem der Ansprüche 8 bis 14 ausgeführt wird.

## Claims

1. Method for building up an object (25) by means of a coordinate measuring machine (10, 40, 50) having an instrument carrier (19), wherein
• the coordinate measuring machine (10, 40, 50) has at least one control unit and one drive unit for the controlled movement of the instrument carrier (19) in relation to a base (12, 42) and
• the instrument carrier (19) is implemented for carrying at least one measuring sensor (22) and production tool (20, 21, 21a-b), which are each modularly attachable in particular, both alone in each case or in combination and
wherein in the scope of the method, based on digital model data which represent the object (25),
• controlled guiding and in particular alignment of the production tool (20, 21, 21a-b) carried in this case by the instrument carrier (19) and
• precisely-positioned material application and/or fixation, controlled in dependence on a respective production tool position and in particular alignment, by means of the production tool (20, 21, 21a-b) are performed, in particular wherein building up the object (25) is performed by layer-by-layer material application and/or fixation, and wherein the base (12, 42) comprises an anti-adhesion coating suitable for the material.

2. Method according to Claim 1,
**characterized by**
an execution of surface scanning with a position determination for at least one measurement point by means of the measuring sensor (22), which is carried by the instrument carrier (19), in particular arranged on the production tool (20, 21, 21a-b), in particular wherein the measuring sensor (22) is implemented as a tactile or optical sensor.

3. Method according to Claim 2,
**characterized in that**
the measurement point is embodied by a surface point
• of the at least partially built-up object (25) and the material application in the scope of building up the object (25) is adapted, in particular corrected, in an automatically controlled manner in dependence on the position of the measurement point and on the digital model data for the object (25), or
• of a pattern object and the digital model data are produced and/or updated in dependence on the surveying of the pattern object, or
• of a previously known reference body (27) and in the scope of the method, an updating step is performed having a referencing of the instrument carrier position on the basis of the position determined on the reference body (27) for the measurement point.

4. Method according to any one of Claims 1 to 3,
**characterized in that**
building up the object (25) is performed by the precisely-positioned material application and/or fixation with a precision corresponding to the position determination for the at least one measurement point in the scope of the surface scanning executable by the coordinate measuring machine, in particular with a corresponding positioning precision for the production tool (20, 21, 21a-b).

5. Method according to any one of Claims 1 to 4, **characterized by**
• positioning of a defined rough body in a specific alignment and positioning with respect to the base (12, 42) and within a measurement volume, which is defined by the mobility of the instrument carrier (19), in particular wherein the positioning is performed by means of a transport tool provided on the instrument carrier or production tool, and
• building up the object (25) by means of precisely-positioned material application by means of the production tool (20, 21, 21a-b) on the rough body, and/or
• the production tool (20, 21, 21a-b) is guided along a defined path, wherein the path is derived from the digital model data, and/or
• the coordinate measuring machine (10, 40, 50) is implemented according to any one of Claims 8 to 14.

6. Method according to any one of Claims 1 to 5, **characterized by**
• a buildup of a base structure of the object (25) by coarse application of the material by means of the production tool (20, 21, 21a-b) and
• an adaptation of the base structure of the object (25) by precisely-positioned surface modification of the at least partially built-up base structure,
in particular wherein in the scope of the adaptation of the base structure
• a precisely-positioned fine application of the material for precise surface structuring by means of the production tool (20, 21, 21a-b) is performed, in particular wherein the production tool (20, 21, 21a-b) is implemented as a printing head (20, 21, 21a-b) or has at least one printing head (20, 21, 21a-b), and/or
• a surface ablation is performed by means of a modification tool, in particular a milling tool or processing laser, wherein the instrument carrier or the production tool carries the modification tool.

7. Method according to Claim 6,
**characterized in that**
• a coarse application printing unit (21a) is provided for the coarse application and a fine application printing unit (21b) is provided for the fine application, wherein
□ the coarse application printing unit (21a) and the fine application printing unit (21b) are arranged on the instrument carrier (19) or
□ the production tool (20) has the coarse application printing unit (21a) and the fine application printing unit (21b), in particular wherein an automatic change of the use of the printing units (21a-b) is performed in dependence on the application to be executed, and/or
• the instrument carrier (19) is aligned in dependence on the execution of the buildup or the adaptation of the base structure in such a manner that the production tool (20, 21, 21a-b) or the modification tool is aligned in a defined manner in a working alignment, which is provided for the material application or for the surface modification, in relation to the object surface, in particular wherein the instrument carrier (19) carries at least two printing heads (20, 21).

8. Coordinate measuring machine (10, 40, 50) having at least an instrument carrier (19), a base (12, 42), a control unit and a drive unit for the controlled movement of the instrument carrier (19) in relation to the base (12, 42), wherein
• the instrument carrier (19) is implemented for carrying at least one measuring sensor (22) and
• the coordinate measuring machine (10, 40, 50) provides a surface scanning mode for determining at least one measurement point position on a surface by touching the surface by means of the measuring sensor (22) carried in this case by the instrument carrier (19),
**characterized in that**
• the instrument carrier (19) is furthermore implemented for carrying a production tool (20, 21, 21a-b) implemented for material application and/or fixation and
• the coordinate measuring machine (10, 40, 50) provides an object buildup mode defined **in that** in the scope thereof, controlled based on digital model data, at least
□ the production tool (20, 21, 21a-b) carried in this case by the instrument carrier (19) can be guided and in particular aligned and
□ by means of the production tool (20, 21, 21a-b), material can be applied and/or fixed in a precisely-positioned manner in dependence on a respective production tool position and in particular alignment,
so that by executing the object buildup mode, in particular controlled by the control unit, the object (25) can be built up, in particular layer-by-layer, based on the digital model data, and
• the base (12, 42) comprises an anti-adhesion coating suitable for the material.

9. Coordinate measuring machine (10, 40, 50) according to Claim 8,
**characterized in that**
the production tool (20, 21, 21a-b) is embodied as
• a printing head (20, 21, 21a-b) implemented for material application and/or
• a laser emitter for emitting a laser beam for material fixation, in particular by laser sintering.

10. Coordinate measuring machine (10, 40, 50) according to Claim 8 or 9,
**characterized in that**
the production tool (20) has a coarse application printing unit (21a) and a fine application printing unit (21b), and also in particular the measuring sensor (22), in particular wherein during execution of the object buildup mode
• in a first phase of the object buildup mode, a base structure of the object (25) is prepared using the coarse application printing unit (21a) and
• in a second phase of the object buildup mode, a surface adaptation of the base structure is performed by means of the fine application printing unit (21b).

11. Coordinate measuring machine (10, 40, 50) according to any one of Claims 8 to 10,
**characterized in that**
the production tool (20, 21, 21a-b) can be guided and positioned, in particular aligned, with a positioning precision provided in the scope of the surface scanning mode for the measuring sensor (22).

12. Coordinate measuring machine (10, 40, 50) according to any one of Claims 8 to 11,
**characterized in that**
• a defined rough body can be placed in a specific alignment and positioning with respect to the base (12, 42) and within a measurement volume, which is defined by the mobility of the instrument carrier (19) and the object (25) can be built up by the precisely-positioned material application on the rough body, in particular by layer-by-layer material application,
and/or
• the digital model data can be generated at least partially by executing the surface scanning mode.

13. Coordinate measuring machine (10, 40, 50) according to any one of Claims 8 to 12, **characterized in that**
• the instrument carrier (19) is furthermore implemented for carrying a modification tool, which is modularly attachable in particular, in particular a milling tool or processing laser, and
• the coordinate measuring machine (10, 40, 50) has an object modification mode defined **in that** in the scope thereof, in particular by the execution thereof, the object surface can be processed in a controlled manner by means of the modification tool carried by the instrument carrier (19), in particular wherein a material ablation is performed, and/or
• the production tool (20) has
□ the measuring sensor (22) and/or
□ a modification unit embodying the modification tool and/or
□ a cooling nozzle,
and/or
• the instrument carrier (19)
□ is embodied as pivotable about at least one axis (A, B, X, Y, Z) and/or
□ is implemented for simultaneously carrying at least the measuring sensor (22) and the production tool (20, 21, 21a-b).

14. Coordinate measuring machine (10, 40, 50) according to any one of Claims 8 to 13,
**characterized in that**
the coordinate measuring machine (10, 40, 50) has material guiding means (18, 31, 32, 55) for providing the material for building up the object (25), in particular a tubular line structure (31, 32) and/or a temperature-controlled pipe arrangement, in particular wherein the material guiding means (18, 31, 32, 55)
• are connected to the production tool (20, 21, 21a-b) and the material supply for the production tool (20, 21, 21a-b) for the material application is thus provided and/or
• have an insulation or damping device with regard to a reduction of the heat emission, in particular thermal radiation.

15. Computer program product, which is stored on a machine-readable carrier, for controlling or executing a method according to any one of Claims 1 to 7, in particular when the computer program product is executed on a control and processing unit of a coordinate measuring machine (10, 40, 50) according to any one of Claims 8 to 14.

## Revendications

1. Procédé de construction d'un objet (25) au moyen d'une machine de mesure de coordonnées (10, 40, 50) avec un porte-instrument (19), dans lequel
• la machine de mesure de coordonnées (10, 40, 50) présente au moins une unité de commande et une unité d'entraînement pour le déplacement commandé du porte-instrument (19) par rapport à une base (12, 42), et
• le porte-instrument (19) est constitué pour porter au moins un capteur de mesure (22), en particulier pouvant être respectivement mis en place de façon modulaire, et un outil de production (20, 21, 21a-b), aussi bien respectivement seul ou de façon combinée, et
dans lequel, dans le cadre du procédé basé sur des données de modèle numériques qui représentent l'objet, il est effectué
• un guidage et en particulier une orientation commandés de l'outil de production (20, 21, 21a-b) porté en l'occurrence par le porte-instrument (19), et
• une application et/ou fixation, avec une précision de position, commandée en fonction d'une position et en particulier d'une orientation respective de l'outil de production, d'un matériau au moyen de l'outil de production (20, 21, 21a-b), dans lequel la construction de l'objet (25) s'effectue en particulier par une application et/ou fixation couche par couche du matériau,
et dans lequel la base (12, 42) présente un revêtement anti-adhérence approprié en ce qui concerne le matériau.

2. Procédé selon la revendication 1,
**caractérisé par**
une réalisation d'un balayage superficiel avec une détermination de position pour au moins un point de mesure au moyen du capteur de mesure (22) porté par le porte-instrument (19), en particulier disposé sur l'outil de production (20, 21, 21a-b), en particulier dans lequel le capteur de mesure (22) est constitué en tant que capteur tactile ou optique.

3. Procédé selon la revendication 2,
**caractérisé en ce que**
le point de mesure est matérialisé par un point superficiel
• de l'objet (25) construit au moins partiellement, et l'application de matériau dans le cadre de la construction de l'objet (25) est adaptée, en particulier corrigée, de façon commandée automatiquement en fonction de la position du point de mesure et des données de modèle numériques pour l'objet (25), ou
• d'un objet type, et les données de modèle numériques sont produites et/ou actualisées en fonction du mesurage de l'objet type, ou
• d'un corps de référence (27) déjà connu et, dans le cadre du procédé, une étape d'actualisation s'effectue avec un référencement de la position de porte-instrument à l'aide de la position définie sur le corps de référence (27) pour le point de mesure.

4. Procédé selon l'une des revendications 1 à 3,
**caractérisé en ce que**
la construction de l'objet (25) par l'application et/ou la fixation du matériau, avec une précision de position, s'effectue avec une précision correspondant à la détermination de position pour le point de mesure au moins au nombre de un dans le cadre du balayage superficiel pouvant être réalisé par la machine de mesure de coordonnées (10, 40, 50), en particulier avec une précision de positionnement correspondante pour l'outil de production (20, 21, 21a-b).

5. Procédé selon l'une des revendications 1 à 4,
**caractérisé par**
• un positionnement d'un corps brut défini dans l'orientation et le positionnement définis par rapport à la base (12, 42) et à l'intérieur du volume de mesure qui est défini par la mobilité du porte-instrument (19), en particulier dans lequel le positionnement s'effectue au moyen d'un outil de transport prévu sur le porte-instrument ou sur l'outil de production, et
• la construction de l'objet (25) au moyen de l'application de matériau, avec une précision de position, au moyen de l'outil de production (20, 21, 21a-b) sur le corps brut, et/ou
• l'outil de production (20, 21, 21a-b) est guidé le long d'un chemin défini, dans lequel le chemin est dérivé à partir des données de modèle numériques, et/ou
• la machine de mesure de coordonnées (10, 40, 50) est constituée selon l'une des revendications 8 à 14.

6. Procédé selon l'une des revendications 1 à 5, **caractérisé par**
• une construction d'une structure de base de l'objet (25) par l'application grossière du matériau au moyen de l'outil de production (20, 21, 21a-b), et
• une adaptation de la structure de base de l'objet (25) par une modification superficielle, avec une précision de position, de la structure de base construite au moins partiellement,
en particulier dans lequel, dans le cadre de l'adaptation de la structure de base, il est effectué
• une application fine du matériau, avec une précision de position, pour la structuration superficielle précise au moyen de l'outil de production (20, 21, 21a-b), dans lequel en particulier l'outil de production (20, 21, 21a-b) est constitué en tant que tête d'impression (20, 21, 21a-b) ou présente au moins une tête d'impression (20, 21, 21a-b), et/ou
• un enlèvement de surface au moyen d'un outil de modification, en particulier un outil de fraisage ou un laser d'usinage, dans lequel le porte-instrument ou l'outil de production porte l'outil de modification.

7. Procédé selon la revendication 6,
**caractérisé en ce que**
• pour l'application grossière, il est prévu une unité d'impression d'application grossière (21a) et, pour l'application fine, une unité d'impression d'application fine (21b), dans lequel
∘ l'unité d'impression d'application grossière (21a) et l'unité d'impression d'application fine (21b) sont disposées sur le porte-instrument (19), ou
∘ l'outil de production (20) présente l'unité d'impression d'application grossière (21a) et l'unité d'impression d'application fine (21b), dans lequel en particulier il est effectué un changement automatique de l'utilisation des unités d'impression (21a-b) en fonction de l'application à réaliser, et/ou
• le porte-instrument (19) est orienté en fonction de la réalisation de la construction ou de l'adaptation de la structure de base de telle sorte que l'outil de production (20, 21, 21a-b) ou respectivement l'outil de modification est, par rapport à la surface de l'objet, orienté de façon définie dans une orientation de travail prévue pour l'application de matériau ou pour la modification de la surface, en particulier dans lequel le porte-instrument (19) porte au moins deux tête d'impression (20, 21).

8. Machine de mesure de coordonnées (10, 40, 50) avec au moins un porte-instrument (19), une base (12, 42), une unité de commande et une unité d'entraînement pour le déplacement commandé du porte-instrument (19) par rapport à la base (12, 42), dans laquelle
• le porte-instrument (19) est constitué pour porter au moins un capteur de mesure (22), et
• la machine de mesure de coordonnées (10, 40, 50) fournit un mode de balayage superficiel pour la détermination d'au moins une position de point de mesure sur une surface par le balayage de la surface au moyen du capteur de mesure (22) porté par le porte-instrument (19),
**caractérisée en ce que**
• le porte-instrument (19) est également constitué pour porter un outil de production (20, 21, 21a-b) constitué pour l'application et/ou la fixation de matériau, et
• la machine de mesure de coordonnées (10, 40, 50) fournit un mode de construction d'objet défini par le fait que, dans son cadre, commandé sur la base de données de modèle numériques, au moins
∘ l'outil de production (20, 21, 21a-b) porté en l'occurrence par le porte-instrument (19) peut être guidé et en particulier aligné, et
∘ au moyen de l'outil de production (20, 21, 21a-b), du matériau peut être appliqué et/ou fixé, avec une précision de position, en fonction d'une position, en particulier d'une orientation, respective de l'outil de production,
de sorte que, par la réalisation du mode de construction d'objet, en particulier sous la commande assurée par l'unité de commande, l'objet (25) peut être construit, en particulier couche par couche, sur la base des données de modèle numériques, et
• la base (12, 42) présente un revêtement anti-adhérence approprié en ce qui concerne le matériau.

9. Machine de mesure de coordonnées (10, 40, 50) selon la revendication 8,
**caractérisé en ce que**
l'outil de production (20, 21, 21a-b) est réalisé en tant que
• tête d'impression (20, 21, 21a-b) constituée pour l'application de matériau, et/ou
• en tant qu'émetteur laser pour l'émission d'un faisceau laser pour la fixation de matériau, en particulier par frittage au laser.

10. Machine de mesure de coordonnées (10, 40, 50) selon la revendication 8 ou 9,
**caractérisée en ce que**
l'outil de production (20) présente une unité d'impression d'application grossière (21a) et une unité d'impression d'application fine (21b), ainsi qu'en particulier le capteur de mesure (22), dans laquelle en particulier, lors de la réalisation du mode de construction d'objet,
• une structure de base de l'objet (25) est établie avec l'unité d'impression d'application grossière (21a) dans une première phase du mode de construction d'objet, et
• une adaptation de surface de la structure de base est effectuée au moyen de l'unité d'impression d'application fine (21b) dans une deuxième phase du mode de construction d'objet.

11. Machine de mesure de coordonnées (10, 40, 50) selon l'une des revendications 8 à 10,
**caractérisée en ce que**
l'outil de production (20, 21, 21a-b) peut être guidé et positionné, en particulier orienté, avec une précision de positionnement pour le capteur de mesure (22) fournie dans le cadre du mode de balayage superficiel.

12. Machine de mesure de coordonnées (10, 40, 50) selon l'une des revendications 8 à 11,
**caractérisée en ce**
• **qu'**un corps brut défini peut être placé dans une orientation et un positionnement définis par rapport à la base (12, 42) et à l'intérieur d'un volume de mesure qui est défini par la mobilité du porte-instrument (19), et l'objet (25) peut être construit par l'application de matériau, avec une précision de position, sur le corps brut, en particulier par une application couche par couche du matériau, et/ou
• les données de modèle numériques peuvent être générées au moins partiellement par la réalisation du mode de balayage superficiel.

13. Machine de mesure de coordonnées (10, 40, 50) selon l'une des revendications 8 à 12,
**caractérisée en ce que**
• le porte-instrument (19) est également constitué pour porter un outil de modification, pouvant en particulier être mis en place de façon modulaire, en particulier un outil de fraisage ou un laser d'usinage, et
• la machine de mesure de coordonnées (10, 40, 50) présente un mode de modification d'objet défini par le fait que, dans son cadre, en particulier du fait de sa réalisation, la surface de l'objet peut être usinée de façon commandée au moyen de l'outil de modification porté par le porte-instrument (19), dans laquelle en particulier un enlèvement de matériau est effectué, et/ou
• l'outil de production (20) présente
∘ le capteur de mesure (22), et/ou
∘ une unité de modification matérialisant l'outil de modification, et/ou
∘ une buse de refroidissement,
• le porte-instrument (19)
∘ est réalisé de façon pivotante autour d'au moins un axe (A, B, X, Y, Z), et/ou
∘ est constitué pour porter simultanément au moins le capteur de mesure (22) et l'outil de production (20, 21, 21a-b).

14. Machine de mesure de coordonnées (10, 40, 50) selon l'une des revendications 8 à 13,
**caractérisée en ce que**
la machine de mesure de coordonnées (10, 40, 50) présente des moyens de guidage de matériau (18, 31, 32, 55) pour la fourniture du matériau pour la construction de l'objet (25), en particulier une structure de conduites (31, 32) de forme tubulaire et/ou un dispositif de tubes pouvant être tempéré, en particulier dans laquelle les moyens de guidage de matériau (18, 31, 32, 55)
• sont raccordés à l'outil de production (20, 21, 21a-b), et de ce fait l'alimentation en matériau pour l'outil de production (20, 21, 21a-b) est fournie pour l'application du matériau, et/ou
• présentent un dispositif d'isolement ou d'isolation en ce qui concerne une réduction du dégagement de chaleur, en particulier du rayonnement de chaleur.

15. Programme d'ordinateur qui est enregistré sur un support lisible par machine, pour la commande ou respectivement la réalisation d'un procédé selon l'une des revendications 1 à 7, en particulier quand le programme d'ordinateur est mis en oeuvre sur une unité de commande et de traitement d'une machine de mesure de coordonnées (10, 40, 50) selon l'une des revendications 8 à 14.
